**Europäisches Patentamt**

**European Patent Office**

**Office européen des brevets**

(19)

(11) **EP 1 357 084 A1**

(12) ## EUROPEAN PATENT APPLICATION

(43) Date of publication:
**29.10.2003 Bulletin 2003/44**

(51) Int Cl.7: **C01B 3/58**, C01B 3/48,
C01B 3/38

(21) Application number: **03005128.8**

(22) Date of filing: **07.03.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **15.04.2002 JP 2002111835**

(71) Applicant: **Nissan Motor Co., Ltd.
Yokohama-shi, Kanagawa (JP)**

(72) Inventor: **Okamoto, Masaru
Yokosuka-shi, Kanagawa (JP)**

(74) Representative: **Weber, Joachim, Dr.
Hoefer, Schmitz, Weber & Partner,
Gabriel-Max-Strasse 29
81545 München (DE)**

(54) **Fuel reforming system**

(57) A fuel reforming system, comprising a reformer (8) which generates reformate gas containing hydrogen, a carbon monoxide oxidizer (9) containing a catalyst which removes carbon monoxide contained in the reformate gas by a shift reaction and a preferential oxidation reaction, and supplies reformate gas from which the carbon monoxide has been removed to the fuel cell (17), and a cooling device (12) which cools the carbon monoxide oxidizer (9) by a coolant. The controller (31) determines whether the carbon monoxide oxidizer (9) is in a marginal operation state where a processing performance of the carbon monoxide oxidation catalyst has reached its limit, and performs an avoidance processing to avoid the marginal operation state of the carbon monoxide oxidation catalyst.

*FIG. 1*

EP 1 357 084 A1

**Description**

FIELD OF THE INVENTION

This invention relates to a fuel reforming system.

BACKGROUND OF THE INVENTION

The fuel reforming system disclosed in JP8-273690A published by the Japanese Patent Office in 1996 generates reformate gas containing hydrogen by a reforming reaction and a partial oxidation reaction in a reformer using air (gas containing oxygen) and raw fuel. The hydrogen-rich reformate gas contains carbon monoxide. The carbon monoxide poisons the electrode catalyst in a polymer electrolyte fuel cell, which contains platinum, and reduces its activity.

JP8-273690A discloses that the reformer is controlled so that the carbon monoxide concentration in the reformate gas is reduced based on the carbon monoxide concentration detected by a carbon monoxide detector. On the basis of this disclosure according to the prior art device, control would be performed to reduce the temperature of the reformer when the carbon monoxide concentration in the reformate gas exceeds a predetermined value. This is because, when the temperature of the reformer falls, the flowrate of generated reformate gas decreases, and it is thought that the carbon monoxide in the reformate gas also decreases.

SUMMARY OF THE INVENTION

However, in this prior art device, the processing performance of the carbon monoxide oxidation catalyst is not taken into account. If the temperature of the reformer is merely reduced when an increase of carbon monoxide in the reformate gas supplied to the fuel cell is detected, it may take too much time until the carbon monoxide in the reformate gas supplied to the fuel cell is reduced, or the temperature of the reformer may fall too much.

More specifically, if the processing performance of the carbon monoxide oxidation catalyst reaches its limit, it is impossible to prevent the increase of the carbon monoxide by using a carbon monoxide oxidizer when the carbon monoxide in the reformate gas supplied to the fuel cell increases, so all of the increased carbon monoxide must be reduced by reducing the reformer temperature. On the other hand, if the processing performance of the carbon monoxide oxidation catalyst has a margin, an amount of carbon monoxide corresponding to this margin could be removed by the carbon monoxide oxidizer, so the temperature drop of the reformer could be reduced accordingly.

If the carbon monoxide in the reformate gas supplied to the fuel cell has increased, to remove the increased carbon monoxide in just proportion, it is preferable to vary the drop in temperature of the reformer according to the processing performance of the carbon monoxide oxidation catalyst. However, in the prior art device, the processing performance of the carbon monoxide oxidation catalyst was not taken into account, so for example if the magnitude of the temperature drop of the reformer were set corresponding to the situation where the processing performance of the carbon monoxide oxidation catalyst has a margin, the temperature drop of the reformer would not be sufficient if the processing performance of the carbon monoxide oxidation catalyst had reached its limit. Hence, untreated carbon monoxide would continue to flow into the fuel cell for some time and the power-generating characteristics of the fuel cell might be impaired.

On the other hand, if the magnitude of the temperature drop of the reformer were set corresponding to the situation where the processing performance of the carbon monoxide oxidation catalyst had reached its limit, the temperature drop of the reformer would be excessive (the temperature drop of the reformer would fall unnecessarily) when the processing performance of the carbon monoxide oxidation catalyst has a margin.

It is therefore an object of this invention to prevent the carbon monoxide oxidizer from operating in a marginal operation state where the processing performance of the carbon monoxide oxidation catalyst has reached its limit, and prevent untreated carbon monoxide from flowing into a fuel cell.

In order to achieve above object, this invention provides a fuel reforming system, comprising a reformer which generates reformate gas containing hydrogen by a reforming reaction and a partial oxidation reaction using an oxygen-containing gas and raw fuel, carbon monoxide oxidizer containing a carbon monoxide oxidation catalyst which removes carbon monoxide contained in the reformate gas by a shift reaction between carbon monoxide in the reformate gas and water, and a preferential oxidation reaction which oxidizes a remaining carbon monoxide not oxidized in the shift reaction using the oxygen-containing gas, and supplies the reformate gas from which the carbon monoxide has been removed to a fuel cell, a cooling device which cools a heat liberated by the shift reaction and preferential oxidation reaction in the carbon monoxide oxidizer by a coolant, and a controller.

The controller functions to determine whether the carbon monoxide oxidizer is in a marginal operation state where a processing performance of the carbon monoxide oxidation catalyst has reached a limit, and perform an avoidance processing to avoid the marginal operation state of the carbon monoxide oxidation catalyst.

The details as well as other features and advantages of this invention are set forth in the remainder of the specification and are shown in the accompanying drawings.

BRIEF DESCRIPTION OF THE DRAWINGS

Fig. 1 is a schematic view of a fuel reforming system according to the present invention.

Fig. 2 is a flowchart of a process for determining the seven cases.

Fig. 3 is a flowchart of a determining process of Case 1.

Fig. 4 is a flowchart of a determining process of Case 2.

Fig. 5 is a flowchart of a determining process of Case 3.

Fig. 6 is a flowchart of a determining process of Case 4.

Fig. 7 is a flowchart of a determining process of Case 5.

Fig. 8 is a flowchart of a determining process of Case 6.

Fig. 9 is a flowchart of a determining process of Case 7.

Fig. 10 is a flowchart of processing to avoid a marginal operation state of a carbon monoxide oxidizer.

Figs. 11 and 12 are flowcharts of a first avoidance processing.

Fig. 13 is a characteristic diagram of a target raw fuel flowrate of a vaporizer.

Fig. 14 is a characteristic diagram of a target air flowrate of a reformer.

Fig. 15 is a characteristic diagram of a distribution ratio.

Fig. 16 is a flowchart of a third avoidance processing.

Fig. 17 is a flowchart of a fourth avoidance processing.

Fig. 18 is a flowchart of a fifth avoidance processing.

Fig. 19 is a flowchart of a sixth avoidance processing.

Fig. 20 is a flowchart of a seventh avoidance processing.

Fig. 21 is a schematic view of a reformer.

DETAILED DESCRIPTION OF THE INVENTION

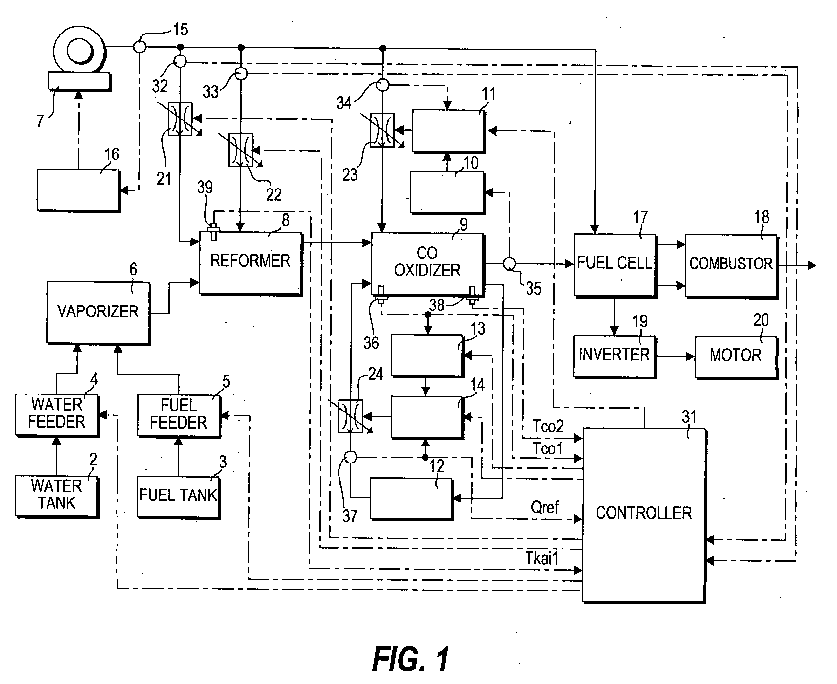

Fig. 1 of the drawings shows a fuel reforming system according to this invention. Firstly, the basic construction and operation of this fuel reforming system will be described.

In Fig. 1, water in a water tank 2 and methanol in a fuel tank 3 are sent to a vaporizer 6 from a water feeder 4 and fuel feeder 5, and heated and vaporized to form a gaseous mixture of water and methanol (raw fuel vapor) which is sent to a reformer 8. The feeders 4, 5 basically comprise a pump and injector.

The target values of the water flowrate and methanol flowrate are computed by a controller 31 based on the power required to be generated by a fuel cell 17. The controller 31 respectively controls flowrate control devices (injectors) in the feeders 4, 5 so that the respective target values are realized. When the system is applied to a vehicle, the required power is computed based on the accelerator depression amount.

Air (gas containing oxygen) is sent to the reformer 8 by a compressor 7. In order to supply all the air needed by the whole fuel cell system, rotation speed control of the compressor 7 is carried out by a flowrate controller 16 so that the compressor discharge flowrate detected by a flowrate sensor 15 is equal to the sum of the air flowrate supplied to the reformer 8, the air flowrate supplied to the carbon monoxide oxidizer 9, and the air flowrate needed by the fuel cell 17. For example, the non-interfering control system disclosed in JP2001-338659A published by the Japanese Patent Office in 2001 can be adopted for the control used by the flowrate controller 16.

The reformer 8 performs the reforming reaction of the gaseous mixture of water and methanol with oxygen in the air, and generates hydrogen-rich reformate gas. The reformer 8 is operated under autothermal conditions under which the heat released by the partial oxidation reaction and the heat absorbed by the decomposition reaction of methanol are balanced.

If the size, construction and catalyst performance of the reformer 8 are determined, the flowrate of water vapor relative to the flowrate of methanol, and the oxygen flowrate in the air relative to the flowrate of methanol, will be effectively fixed.

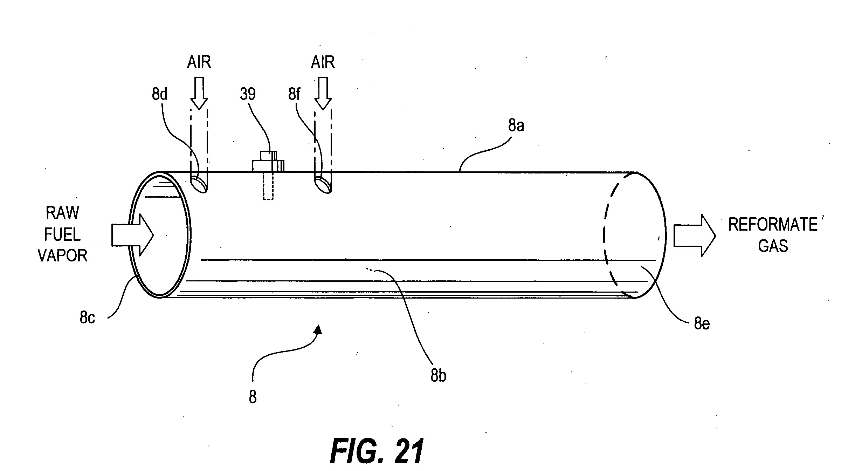

The reformer 8 is filled with a catalyst 8b which performs a partial oxidation reaction and a reforming reaction in a cylindrical container 8a, as shown in Fig. 21. A raw fuel inlet 8c and an air inlet 8d near to it are provided at one end, and a gas outlet 8e is provided at the other end. If all the air flowrate required for the partial oxidation reaction is supplied from the air inlet 8d, the catalyst temperature in the reformer 8 may exceed the target operating temperature $Tm$ (for example, 400°C). For this reason, a middle air inlet 8f is provided further downstream than the air inlet 8d, and air is supplied from both the air inlet 8d and middle air inlet 8f.

In the controller 31, target values are determined so that the air flowrate (hereafter, air inlet flowrate) from the air inlet 8d and the air flowrate from the middle air inlet 8f (hereafter, middle air flowrate) are optimal, the opening of the flow control valve 21 (air inlet flowrate regulator) is controlled so that the actual air inlet flowrate detected by a flowrate sensor 32 coincides with the target value, and the opening of a flow control valve 22 (middle air flowrate regulator) is controlled so that the actual middle air flowrate detected by a flowrate sensor 33 coincides with the target value.

The hydrogen-rich reformate gas generated by the reformer 8 contains several % of carbon monoxide. This carbon monoxide poisons the electrode catalyst, which for example contains platinum, of the polymer electrolyte fuel cell 17, and reduces its activity. Therefore, the reformate gas must be supplied to the fuel cell 17 after the carbon monoxide has been reduced to several tens of ppm by the carbon monoxide oxidizer 9 which comprises a shift reactor and a PROX reactor (preferential oxidation reactor).

Reformate gas containing several % of carbon monoxide is sent to the shift reactor, and carbon monoxide is reduced by the catalyst in the shift reaction. The operating temperature of the shift reactor is 200°C-300°C, and produces reformate gas which contains 0. several percent of carbon monoxide due to a thermodynamic chemical equilibrium. The reformate gas wherein carbon monoxide was reduced by the shift reaction is sent to the PROX reactor, and carbon monoxide is further reduced to several tens of ppm by a catalytic oxidation reaction (exothermic). Oxygen required for the catalytic oxidation reaction is supplied as air from the compressor 7.

A carbon monoxide sensor 35 is provided immediately downstream of the compressor 7. In a CO controller 10 into which the signal from the carbon monoxide sensor 35 is inputted, the target value of the air flowrate supplied to the carbon monoxide oxidizer 9 is computed so that the actual concentration of carbon monoxide detected by the sensor 35 is below a predetermined value determined by the specification of the fuel cell 17. According to this target value, the opening of a flow control valve 23 (air flowrate regulator) is controlled by the flowrate controller 11 so that the actual air flowrate detected by a flowrate sensor 34 coincides with the target value.

In the PROX reactor, oxidation takes place in a hydrogen atmosphere, so the combustion of hydrogen (exothermic reaction) takes place at the same time. In order to remove the heat generated by the above catalytic oxidation reaction (exothermic) and the hydrogen combustion reaction (exothermic), and to maintain an operating temperature of for example several tens of °C above 100°C, the carbon monoxide oxidizer 9 is cooled by a coolant from a cooler 12. In a temperature controller 13, a target value of the coolant flowrate supplied to the carbon monoxide oxidizer 9 is computed so that an inlet catalyst temperature $Tco1$ of the carbon monoxide oxidizer 9 detected by a temperature sensor 36 does not exceed a maximum value. The opening of a flow control valve 24 (coolant flowrate regulator) is controlled by a flowrate controller 14 so that the actual coolant flowrate detected by a flowrate sensor 37 coincides with this target value.

Reformate gas wherein the carbon monoxide has been reduced to a very low concentration and the air from the compressor 7 are sent to a fuel electrode and air electrode of the fuel cell 17. In the fuel cell 17, the oxygen in the air and the hydrogen in the reformate gas are made to react electrochemically to generate power.

It is difficult to use all the hydrogen in the reformate gas in the fuel cell 17. Therefore, reformate gas containing hydrogen which was not used for power generation and air containing oxygen which was not used for power generation are sent to and burned in a catalytic combustor 18. The obtained hot combustion gas is sent to a vaporizer 6, and is reused as energy to vaporize methanol and water.

The fuel reforming system according to this embodiment is installed in a vehicle. The current extracted from the fuel cell 17 is passed via an inverter 19 to a vehicle drive motor 20. The inverter 19 and motor 20 are loads which consume the power generated by the fuel cell 17.

In the above-mentioned fuel reforming system, when the carbon monoxide oxidizer 9 is in a marginal operation state (i.e., when the processing performance of the carbon monoxide oxidation catalyst has reached its limit), an amount of carbon monoxide exceeding the amount currently processed cannot be removed by the carbon monoxide oxidizer 9. According to this invention, it is determined whether or not the carbon monoxide oxidizer 9 is in the marginal operation state from the operation state of the carbon monoxide oxidizer 9. When the carbon monoxide oxidizer 9 is in the marginal operation state, processing which avoids the marginal operation state is performed.

Four parameters are used for detecting the operation state of the carbon monoxide oxidizer 9, i.e., the inlet catalyst temperature $Tco1$ of the carbon monoxide oxidizer 9, the outlet catalyst temperature $Tco2$ of the carbon monoxide oxidizer 9, the air flowrate $Qcoa$ to the carbon monoxide oxidizer 9, and the coolant flowrate $Qref$ to the carbon monoxide oxidizer 9. The inlet catalyst temperature $Tco1$ is detected by the temperature sensor 36, the outlet catalyst temperature $Tco2$ is detected by a temperature sensor 38, the air flowrate $Qcoa$ is detected by the flowrate sensor 34, and the coolant flowrate $Qref$ is detected by the flowrate sensor 37, respectively.

The carbon monoxide oxidizer 9 comprises the shift reactor and the PROX reactor. The shift reactor is disposed upstream, and the PROX reactor is disposed downstream. The inlet catalyst of the carbon monoxide oxidizer 9 denotes the catalyst which performs the shift reaction, and the outlet catalyst of the carbon monoxide oxidizer 9 denotes the catalyst which performs the PROX reaction.

The carbon monoxide oxidizer 9 is in the marginal operation state when it is in one of the following seven situations. In any of these cases, avoidance processing corresponding to the case is performed to avoid the marginal operation state.

Case 1

Case 1 is the case where the coolant flowrate $Qref$ to the carbon monoxide oxidizer 9 exceeds a maximum value $QrefMAX$, and the outlet catalyst temperature $Tco2$ of the carbon monoxide oxidizer 9 exceeds a maximum value $Tco2MAX$.

In Case 1, the following first avoidance processing is performed.

(1) The raw fuel flowrate to the reformer 8 is reduced, and the air flowrate to the reformer 8 is decreased so that a flowrate ratio $Rqref$, which is a value obtained by dividing the flowrate of oxygen in the air supplied to the reformer 8 by the raw fuel flowrate to the reformer 8, is smaller than a target flowrate ratio $tRqref$. The flowrate ratio is the mass flowrate ratio. The flowrate ratio is expressed by the following equation (1):

$$Rqref = Qo \ / \ Qgen \qquad (1)$$

where,

$Qo$ = oxygen mass flowrate to the reformer
$Qgen$ = raw fuel mass flowrate to the reformer.

The target flowrate ratio $tRqref$ is a fixed value determined by the reaction equation in the reformer 8.

(2) The period during which the above two processes are performed, is the predetermined period until the effect of a drop in raw fuel flowrate is evident, the reformate gas flowrate falls, and the carbon monoxide in the reformate gas decreases. After the predetermined period has elapsed, the air flowrate to the reformer 8 is increased so that the flowrate ratio increases to the target flowrate ratio while the raw fuel flowrate is still reduced.

## Case 2

In Case 2, the inlet catalyst temperature $Tco1$ of the carbon monoxide oxidizer 9 is lower than a minimum value $Tco1MIN$, the coolant flowrate $Qref$ supplied to the carbon monoxide oxidizer 9 is lower than a minimum value $QrefMIN$, and the air flowrate $Qcoa$ supplied to the carbon monoxide oxidizer 9 exceeds a minimum value $QcoaMIN$.

In Case 2, the second avoidance processing is performed. The second avoidance processing is identical to the first avoidance processing.

## Case 3

Case 3 is the case where the coolant flowrate $Qref$ supplied to the carbon monoxide oxidizer 9 exceeds the maximum value $QrefMAX$, the inlet catalyst temperature $Tco1$ of the carbon monoxide oxidizer 9 lies between the maximum value $Tco1MAX$ and minimum value $Tco1MIN$, and the outlet catalyst temperature $Tco2$ of the carbon monoxide oxidizer 9 lies between the maximum value $Tco2MAX$ and minimum value $Tco2MIN$.

In Case 3, the third avoidance processing is performed so that the raw fuel flowrate to the reformer 8 is reduced and the air flowrate to the reformer 8 is decreased to maintain the flowrate ratio at the target flowrate ratio.

## Case 4

In Case 4, the air flowrate $Qcoa$ to the carbon monoxide oxidizer 9 exceeds a maximum value $QcoaMAX$ regardless of the coolant flowrate $Qref$ to the carbon monoxide oxidizer 9, the inlet catalyst temperature $Tco1$ of the carbon monoxide oxidizer 9 and the outlet catalyst temperature $Tco2$ of the carbon monoxide oxidizer 9. In Case 4, fourth avoidance processing is performed so that the air flowrate to the reformer 8 is decreased.

## Case 5

In Case 5, the outlet catalyst temperature $Tco2$ of the carbon monoxide oxidizer 9 exceeds the maximum value $Tco2MAX$, and the coolant flowrate $Qref$ supplied to the carbon monoxide oxidizer 9 is less than a maximum value $QrefMAX$.

In Case 5, the fifth avoidance processing is performed so that the coolant flowrate to the carbon monoxide oxidizer 9 is increased.

Case 6 In Case 6, the inlet catalyst temperature $Tco1$ of the carbon monoxide oxidizer 9 is lower than minimum value $Tco1MIN$, the coolant flowrate $Qref$ supplied to the carbon monoxide oxidizer 9 exceeds the minimum value $QrefMIN$ and the air flowrate $Qcoa$ supplied to the carbon monoxide oxidizer 9 exceeds the minimum value $QcoaMIN$.

In Case 6, the sixth avoidance processing is performed so that the coolant flowrate to the carbon monoxide oxidizer 9 is decreased.

Case 7 In Case 7, the air flowrate $Qcoa$ supplied to the carbon monoxide oxidizer 9 is lower than the minimum value $QcoaMIN$ regardless of the coolant flowrate $Qref$ to the carbon monoxide oxidizer 9, the inlet catalyst temperature $Tco1$ and the outlet catalyst temperature $Tco2$ of the carbon monoxide oxidizer 9.

In Case 7, the seventh avoidance processing is performed so that the raw fuel flowrate and air flowrate to the reformer 8 are gradually reduced, and power generation by the fuel cell 17 is stopped.

The marginal values of temperature and flowrate which appear in Cases 1-7 are determined as follows. The maximum value $Tco1MAX$ and minimum value $Tco1MIN$ of the inlet catalyst temperature $Tco1$ of the carbon monoxide oxidizer 9, and the maximum value $Tco2MAX$ and minimum value $Tco2MIN$ of the outlet catalyst temperature $Tco2$ of the carbon monoxide oxidizer 9, are determined by the volume of the carbon monoxide oxidizer 9, and by the heat resistance of the carbon monoxide oxidation catalyst in the carbon monoxide oxidizer 9. The maximum value $QcoaMAX$ and the minimum value $QcoaMIN$ of the air flowrate $Qcoa$ supplied to the carbon monoxide oxidizer 9 are determined by the performance of the compressor 7. The maximum value *QrefMAX* and minimum value *QrefMIN* of coolant flowrate are determined according to the performance of the pump which discharges the coolant.

Although the air flowrate to the reformer 8 is decreased in Cases 1, 2, 3 and 4, the purpose of decreasing the air flowrate is different in Cases 1, 2, 3 and 4. As air can be supplied to the reformer 8 from the air inlet 8d and the middle air inlet 8f, the method of decreasing the air flowrate to the reformer 8 is made different as follows according to the difference in purpose.

(1) When it is desired to reduce the raw fuel conversion rate in the reformer 8 as in Cases 1 and 2, the middle air flowrate is reduced first and the air inlet flowrate is not changed. The air supplied from the middle air inlet 8f is the part which could not be supplied from the air inlet 8d since the inlet catalyst temperature of the reformer 8 would reach too high a temperature, and it has an auxiliary role. Therefore, when the air flowrate is decreased, the middle air flowrate, which performs an auxiliary role, is made to decrease. In this case, although the catalyst temperature near the air inlet 8d of the reformer 8 does not change, the catalyst temperature near the middle air inlet 8f falls. The middle air flowrate continues to decrease and eventually becomes zero. If further reduction of the air flowrate to the reformer 8 is required, the air inlet flowrate is decreased.

The reduction of the air flowrate to the reformer 8 in Case 3 aims to maintain the raw fuel conversion rate in the reformer 8, and is treated identically to the reduction of the air flowrate to the reformer 8 in Cases 1 and 2.

(2) When it is desired to reduce the temperature of the reformer 8 as in Case 4, both the catalyst temperature near the air inlet 8d of the reformer 8, and the catalyst temperature near the middle air inlet 8f of the reformer 8 are lowered. For this purpose, both the air inlet flowrate and middle air flowrate are lowered.

Next, the control performed by the controller 31 will be described in detail, referring to the flowcharts.

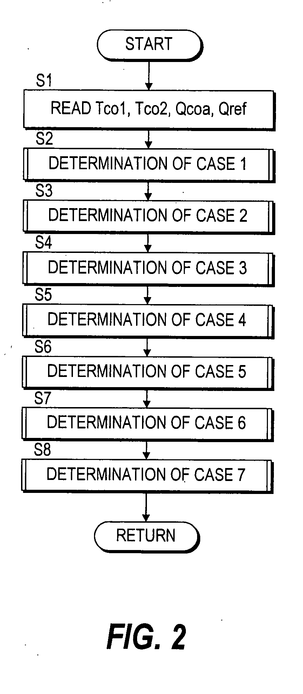

Fig. 2 determines which of the above seven cases should be applied, and is performed at a fixed interval (e.g., every 10 milliseconds).

All the determinations of whether or not any of Cases 1-7 should be applied, are made in steps S2-S8. Therefore, it may occur that two or more cases apply simultaneously. If avoidance processing is performed corresponding to all the relevant cases, different avoidance processings may overlap. Hence, the seven cases are determined sequentially as shown in Fig. 2, and if two or more cases apply simultaneously, only the avoidance processing corresponding to the case determined later is performed.

In Fig. 2, in a step S1, the inlet catalyst temperature *Tco1* and the outlet catalyst temperature *Tco2* of the carbon monoxide oxidizer 9, and the air flowrate *Qcoa* to the carbon monoxide oxidizer 9 and the coolant flowrate *Qref* to the carbon monoxide oxidizer 9, are read.

The inlet catalyst temperature *Tco1* and outlet catalyst temperature *Tco2* are detected by the temperature sensors 36, 38 (catalyst temperature detection means), the air flowrate *Qcoa* is detected by the flowrate sensor 34 (air flowrate detection means) and the coolant flowrate *Qref* is detected by the flowrate sensor 37 (coolant flowrate detection means).

In steps S2-S8, it is determined whether or not any of the seven above-mentioned cases apply in this order. When one of the cases does apply, a flag corresponding to this case is set to "1". There are seven flags *FLAG_J1 - FLAG_J7* corresponding to the seven cases, and the initial value of all flags is "0." When one of the cases applies, the flag corresponding to that case is set to "1."

Next, the subroutines of steps S2-S8 of Fig. 2 will be described.

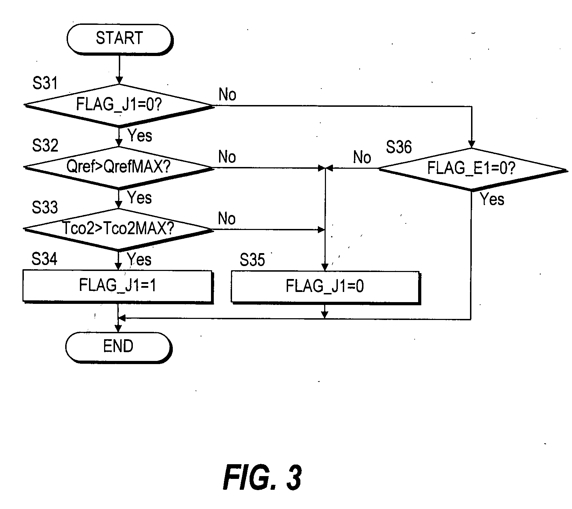

Fig. 3 shows the subroutine of the step S2 of Fig. 2, and determines whether or not Case 1 applies.

In a step S31, the flag *FLAG_J1* is observed. As the initial value of the flag *FLAG_J1* is "0", the routine proceeds to steps S32 and S33, the coolant flowrate *Qref* to the carbon monoxide oxidizer 9 is compared with its maximum value *QrefMAX*, and the outlet catalyst temperature *Tco2* of the carbon monoxide oxidizer 9 is compared with its maximum value *Tco2MAX*, respectively.

When the coolant flowrate *Qref* to the carbon monoxide oxidizer 9 exceeds the maximum value *QrefMAX* and the outlet catalyst temperature *Tco2* of the carbon monoxide oxidizer 9 exceeds the maximum value *Tco2MAX*, it is determined that Case 1 applies, the routine proceeds to a step S34, and the flag *FLAG_J1* is set to "1." On the other hand, when the coolant flowrate *Qref* to the carbon monoxide oxidizer 9 is lower than the maximum value *QrefMAX*, or when the outlet catalyst temperature *Tco2* of the carbon monoxide oxidizer 9 is lower than the maximum value *Tco2MAX*, the routine proceeds to a step S35 and the flag *FLAG_J1* is set to "0."

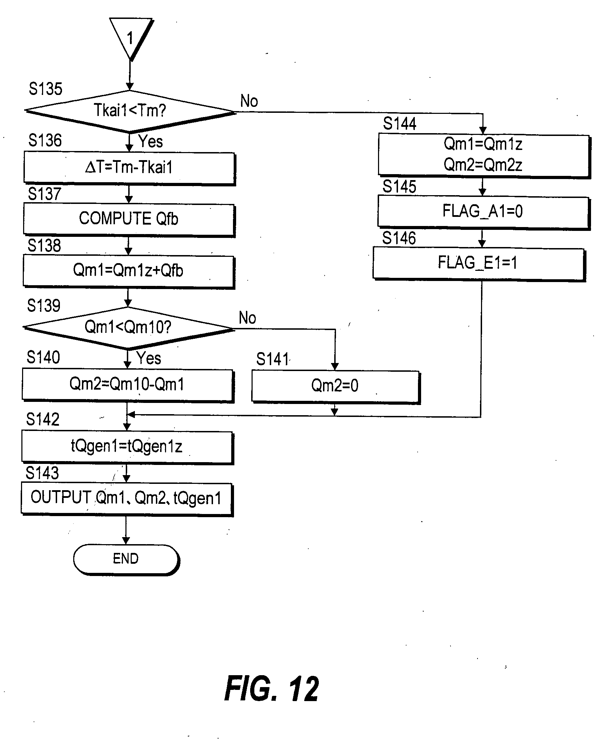

If the flag *FLAG_J1* is set to "1", the routine proceeds from the step S31 to a step S36 from the next occasion, and the flag *FLAG_E1* is observed. The flag *FLAG_E1* becomes "1" when the first avoidance processing, described later, is completed (step S146 of Fig. 12). While the flag *FLAG_E1* is "0", the routine is terminated, (at this time, the *FLAG_J1*=1), and when the flag *FLAG_E1* is "1", the routine proceeds from the step S36 to the step S35, and the flag *FLAG_J1* is set to "0."

According to the processing of Fig. 3, even if *Qref* falls below *QrefMAX* or *Tco2* falls below *Tco2MAX* during execution of the first avoidance processing (*FLAG_J1*=1), the first avoidance processing is not interrupted.

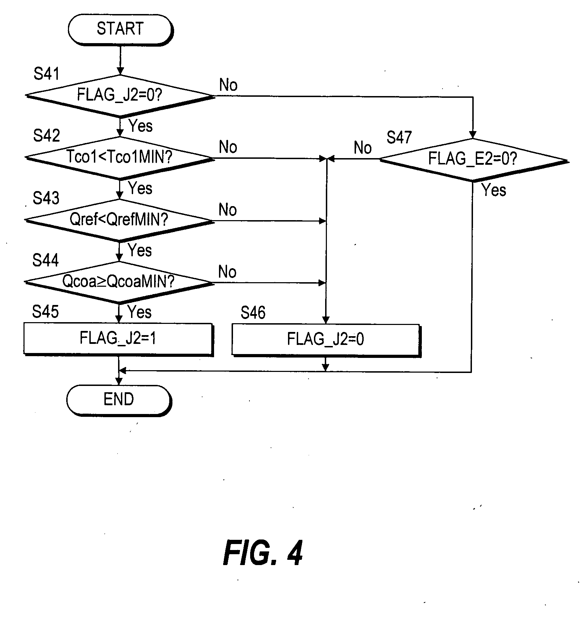

Fig. 4 is the subroutine of the step S3 of Fig. 2, and determines whether or not Case 2 applies.

In a step S41, the flag *FLAG_J2* is observed.

As the initial value of the flag *FLAG_J2* is "0", the routine proceeds to steps S42, S43, S44, the inlet catalyst temperature *Tco1* of the carbon monoxide oxidizer 9 is compared with its minimum value *Tco1MIN*, the coolant flowrate *Qref* to the carbon monoxide oxidizer 9 is compared with its minimum value *QrefMIN*, and the air flowrate *Qcoa* to the carbon monoxide oxidizer 9 is compared with its minimum value *QcoaMIN*, respectively.

When the inlet catalyst temperature *Tco1* of the carbon monoxide oxidizer 9 is lower than the minimum value *Tco1MIN*, the coolant flowrate *Qref* to the carbon monoxide oxidizer 9 is lower than the minimum value *QrefMIN* and the air flowrate *Qcoa* to the carbon monoxide oxidizer 9 exceeds the minimum value *QcoaMIN*, it is determined that Case 2 applies, the routine proceeds to a step S45, and the flag *FLAG_J2* is set to "1."

On the other hand, if the inlet catalyst temperature *Tco1* of the carbon monoxide oxidizer 9 exceeds the minimum value *Tco1MIN*, the coolant flowrate *Qref* to the carbon monoxide oxidizer 9 exceeds the minimum value *QrefMIN* or the air flowrate *Qcoa* to the carbon monoxide oxidizer 9 is lower than the minimum value *QcoaMIN*, the routine proceeds to the step S46, and the flag *FLAG_J2* is set to "0."

If the flag *FLAG_J2* is set to "1", the routine proceeds from the step S41 to a step S47 from the next occasion, and the flag *FLAG_E2* is observed. The flag *FLAG_E2 is* set to "1" when the second avoidance processing mentioned later is completed. While the flag *FLAG_E2 is* "0", the routine is terminated (at this time, the *FLAG_J2*=1) and when the flag *FLAG_E2* becomes "1", the routine proceeds from the step S47 to a step S46, and the *FLAG_J2* is set to "0."

According to the processing of Fig. 4, even if *Tco1* exceeds *Tco1MIN, Qref* exceeds *QrefMIN* or *Qcoa* is less than *QcoaMIN* during execution of the second avoidance processing (*FLAG_J2*=1), the second avoidance processing is not interrupted.

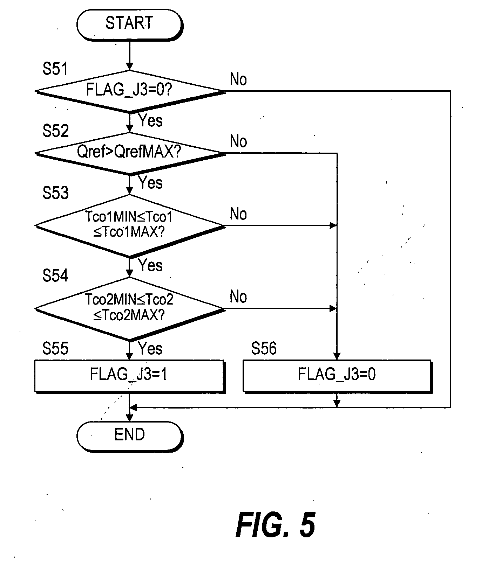

Fig. 5 shows the subroutine of the step S4 of Fig. 2, and determines whether or not Case 3 applies.

In a step S51, the flag *FLAG_J3* is observed. As the initial value of the flag *FLAG_J3* is "0", the routine proceeds to steps S52, S53, S54, the coolant flowrate *Qref* to the carbon monoxide oxidizer 9 is compared with its maximum value *QrefMAX*, the inlet catalyst temperature *Tco1* of the carbon monoxide oxidizer 9 is compared with its maximum value *Tco1MAX* and minimum value *Tco1MIN*, and the outlet catalyst temperature *Tco2* of the carbon monoxide oxidizer 9 is compared with its maximum value *Tco2MAX* and minimum value *Tco2MIN*, respectively.

When the coolant flowrate *Qref* to the carbon monoxide oxidizer 9 exceeds the maximum value *QrefMAX*, the inlet catalyst temperature *Tco1* of the carbon monoxide oxidizer 9 lies between its maximum value *Tco1MAX* and minimum value *Tco1MIN*, and the outlet catalyst temperature *Tco2* of the carbon monoxide oxidizer 9 lies between its maximum value *Tco2MAX* and minimum value *Tco2MIN*, it is determined that Case 3 applies, the routine proceeds to a step S55, and the flag *FLAG_J3* is set to "1."

On the other hand, when the coolant flowrate *Qref* to the carbon monoxide oxidizer 9 is lower than the maximum value *QrefMAX*, the inlet catalyst temperature *Tco1* of the carbon monoxide oxidizer 9 does not lie between its maximum value *Tco1MAX* and minimum value *Tco1MIN*, or the outlet catalyst temperature *Tco2* of the carbon monoxide oxidizer 9 does not lie between the maximum value *Tco2MAX* and minimum value *Tco2MIN*, the routine proceeds to a step S56 and the flag *FLAG_J3* is set to "0."

If flag *FLAG_J3* is "1", the routine is terminated without proceeding to the step S52 and subsequent steps. This is so that, when it is determined that Case 3 applies, the determination result will be maintained until operation stops.

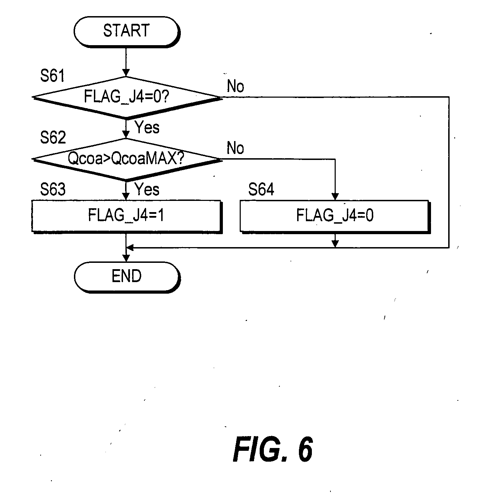

Fig. 6 shows the subroutine of the step S5 of Fig. 2, and determines whether or not Case 4 applies.

In a step S61, the flag *FLAG_J4* is observed. As the initial value of flag *FLAG_J4* is "0", the routine proceeds to a step S62, and the air flowrate *Qcoa* to the carbon monoxide oxidizer 9 is compared with its maximum value *QcoaMAX*.

When the air flowrate *Qcoa* to the carbon monoxide oxidizer 9 exceeds the maximum value *QcoaMAX*, it is determined that Case 4 applies, the routine proceeds to a step S63, and the flag *FLAG_J4* is set to "1." On the other hand, when the air flowrate *Qcoa* to the carbon monoxide oxidizer 9 is lower than the maximum value *QcoaMAX*, the routine proceeds to a step S64 and the flag *FLAG_J4* is set to "0."

If the flag *FLAG_J4* is "1", the routine is terminated without proceeding to the step S62 and subsequent steps. This is so that, when it is determined that Case 4 applies, the determination result is maintained until operation stops.

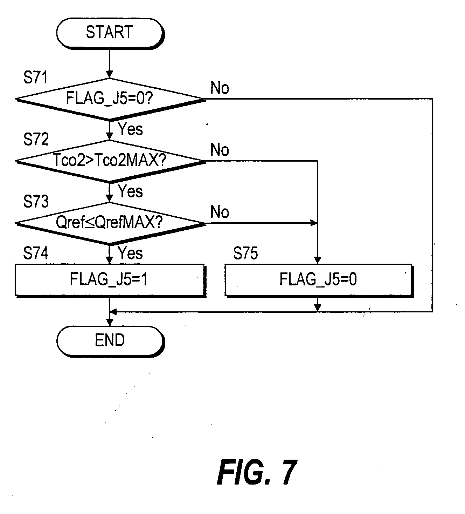

Fig. 7 shows the subroutine of the step S6 of Fig. 2, and determines whether or not Case 5 applies.

In a step S71, the flag *FLAG_J5* is observed. As the initial value of flag *FLAG_J5* is "0", the routine proceeds to steps S72 and S73, the outlet catalyst temperature *Tco2* of the carbon monoxide oxidizer 9 is compared with its maximum value *Tco2MAX*, and the coolant flowrate *Qref* to the carbon monoxide oxidizer 9 is compared with its maximum value *QrefMAX*, respectively.

If the outlet catalyst temperature *Tco2* of the carbon monoxide oxidizer 9 exceeds the maximum value *Tco2MAX*, and the coolant flowrate *Qref* to the carbon monoxide oxidizer 9 is lower than the maximum value *QrefMAX*, it is determined that Case 5 applies, the routine proceeds to a step S74, and the flag *FLAG_J5* is set to "1." On the other hand, when the outlet catalyst temperature *Tco2* of the carbon monoxide oxidizer 9 is lower than the maximum value *Tco2MAX*, or when the coolant flowrate $Qref$ to the carbon monoxide oxidizer 9 exceeds the maximum value $QrefMAX$, the routine proceeds to a step S75 and the flag $FLAG\_J5$ is set to "O."

If the flag $FLAG\_J5$ is "1", the routine is terminated without proceeding to step S72 and subsequent steps. This is so that, when it is determined that Case 5 applies, the determination result is maintained until operation stops.

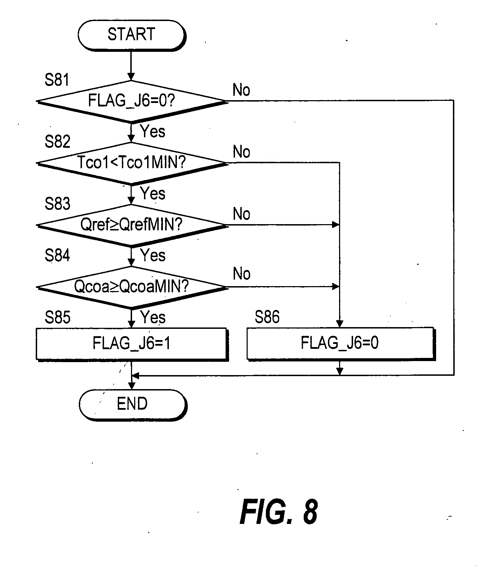

Fig. 8 shows the subroutine of the step S7 of Fig. 2, and determines whether or not Case 6 applies.

In a step S81, the Flag $FLAG\_J6$ is observed. As the initial value of the flag $FLAG\_J6$ is "0", the routine proceeds to steps S82, S83, S84, the inlet catalyst temperature $Tco1$ of the carbon monoxide oxidizer 9 is compared with its minimum value $Tco1MIN$, the coolant flowrate $Qref$ to the carbon monoxide oxidizer 9 is compared with its minimum value $QrefMIN$ and the air flowrate $Qcoa$ to the carbon monoxide oxidizer 9 is compared with its minimum value $QcoaMIN$, respectively.

When the inlet catalyst temperature $Tco1$ of the carbon monoxide oxidizer 9 is lower than the minimum value $Tco1MIN$, the coolant flowrate $Qref$ to the carbon monoxide oxidizer 9 exceeds the minimum value $QrefMIN$ and the air flowrate $Qcoa$ to the carbon monoxide oxidizer 9 exceeds the minimum value $QcoaMIN$, it is determined that Case 6 applies, the routine proceeds to a step S85, and the flag $FLAG\_J6$ is set to "1." On the other hand, if the inlet catalyst temperature $Tco1$ of the carbon monoxide oxidizer 9 exceeds its minimum value $Tco1MIN$, the coolant flowrate $Qref$ to the carbon monoxide oxidizer 9 is lower than the minimum value $QrefMIN$ or the air flowrate $Qcoa$ to the carbon monoxide oxidizer 9 is lower than the minimum value $QcoaMIN$, the routine proceeds to a step S86 and the flag $FLAG\_J6$ is set to "0."

If the flag $FLAG\_J6$ is "1", the routine is terminated without proceeding to the step S82 and subsequent steps. This is so that, when it is determined that Case 6 applies, the determination result is maintained until operation stops.

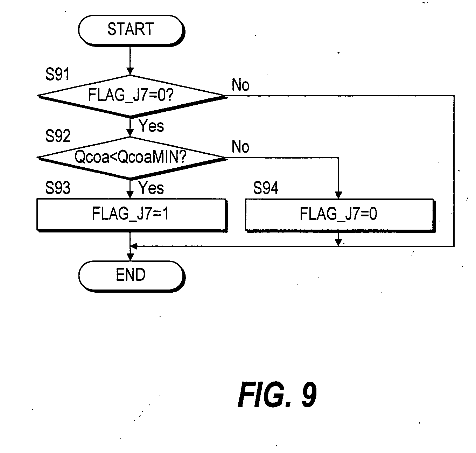

Fig. 9 shows the subroutine of the step S7 of Fig. 2, and determines whether or not Case 7 applies.

In a step S91, the Flag $FLAG\_J7$ is observed. As the initial value of flag $FLAG\_J7$ is "0", the routine proceeds to a step S92, and the air flowrate $Qcoa$ to the carbon monoxide oxidizer 9 is compared with its minimum value $QcoaMIN$.

When the air flowrate $Qcoa$ to the carbon monoxide oxidizer 9 is lower than its minimum value $QcoaMIN$, it is determined that Case 7 applies, the routine proceeds to a step S93, and the flag $FLAG\_J7$ is set to "1." On the other hand, when the air flowrate $Qcoa$ to the carbon monoxide oxidizer 9 exceeds its minimum value $QcoaMIN$, the routine proceeds to a step S94, and the flag $FLAG\_J7$ is set to "0."

If the flag $FLAG\_J7$ is "1", the routine is terminated without proceeding to the step S92 or subsequent steps. This is so that, when it is determined that Case 7 applies, the determination result is maintained until operation stops.

It may occur that, after executing the steps S2-S8 in Fig. 2, two or more flags are simultaneously "1." As avoidance processing corresponding to a flag is performed when that flag is "1", different avoidance processing will overlap if two or more flags are simultaneously "1". Hence, when two or more cases apply, only the avoidance processing corresponding to the latter case determined to apply, is performed.

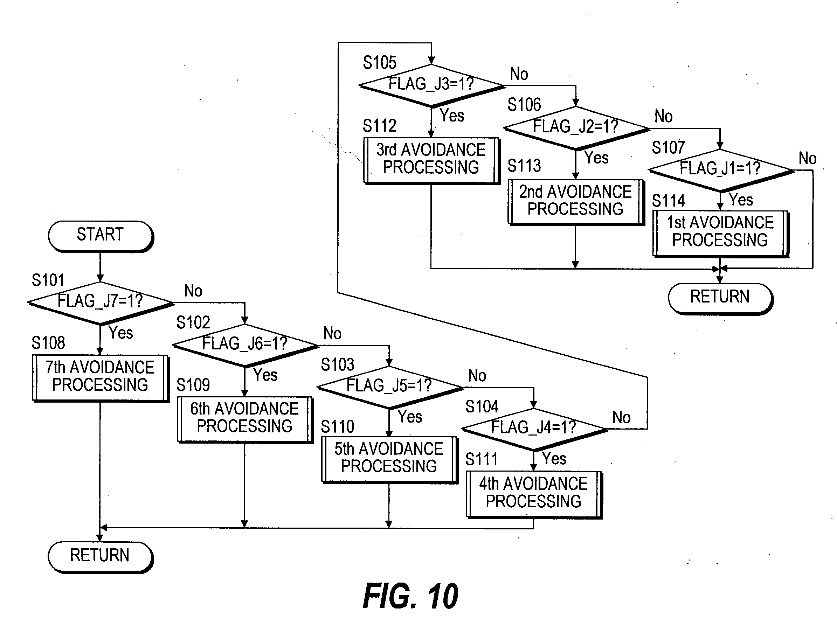

For example, as shown in Fig. 10, when the flag $FLAG\_J7$ is "1", the routine proceeds from a step S101 to a step S108, and the seventh avoidance processing is performed.

When the $FLAG\_J7$ is "0" and the flag $FLAG\_J6$ is "1", the routine proceeds to the steps S101, S102, S109, and the sixth avoidance processing is performed.

When the $FLAG\_J7, FLAG\_J6$ are "0" and the $FLAG\_J5$ is "1", the routine proceeds to the steps S101, S102, S103, S110, and the fifth avoidance processing is performed.

When the $FLAG\_J7, FLAG\_J6$ and $FLAG\_J5$ are "0" and the flag $FLAG\_J4$ is "1", the routine proceeds to the steps S101, S102, S103, S104, S111, and the fourth avoidance processing is performed.

When the $FLAG\_J7, FLAG\_J6, FLAG\_J5$ and $FLAG\_J4$ are "0" and the flag $FLAG\_J3$ is "1", the routine proceeds to the steps S101, S102, S103, S104, S105, S112, and the third avoidance processing is performed.

When the $FLAG\_J7, FLAG\_J6, FLAG\_J5, FLAG\_J4$ and $FLAG\_J3$ are "0" and the flag $FLAG\_J2$ is "1", the routine proceeds to the steps S101, S102, S103, S104, S105, S106, S113, and the second avoidance processing is performed.

When the $FLAG\_J7, FLAG\_J6, FLAG\_J5, FLAG\_J4, FLAG\_J3$ and $FLAG\_J2$ are "0" and the flag $FLAG\_J1$ is "1", the routine proceeds to the steps S101, S102, S103, S104, S105, S106, S107, S114, and the first avoidance processing is performed.

When all seven flags are "0", nothing is done. The state when all seven flags are "0" is defined as "the usual state".

Next, the avoidance processing of the steps S108-S114 of Fig. 10 will be described.

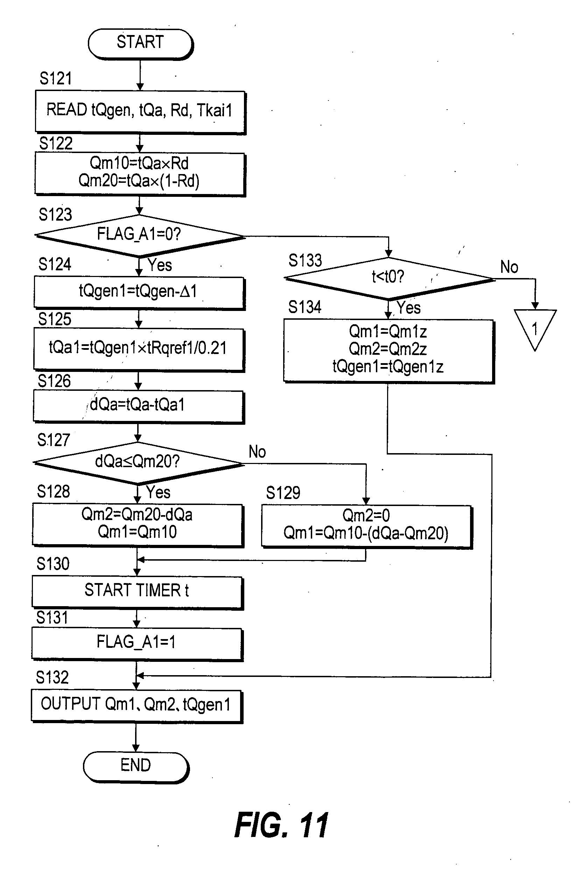

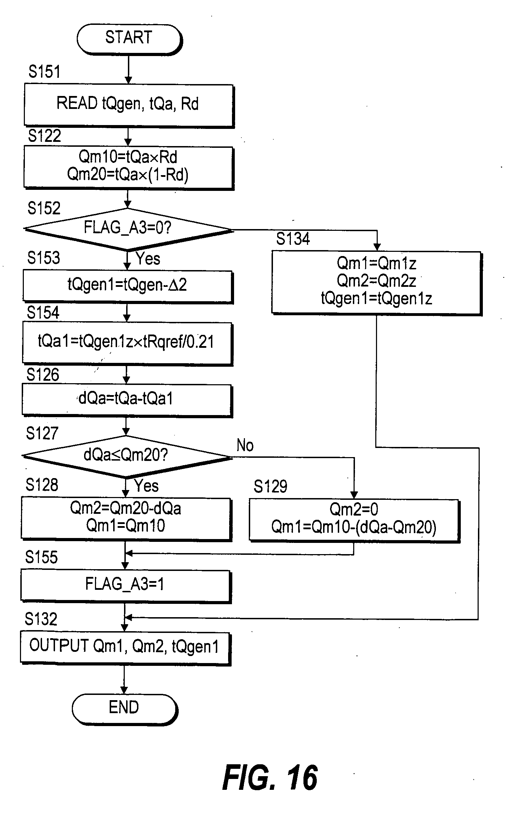

Fig. 11 and Fig. 12 are for computing a target air inlet flowrate $Qm1$ and a target middle air flowrate $Qm2$ of the reformer 8 and a target raw fuel flowrate $tQgen$ of the vaporizer 6 in the first avoidance processing. Fig. 11 and Fig. 12 are subroutines of the step S114 of Fig. 10, and are executed with an identical period to that of Fig. 10. In order not to complicate the processing, the flowcharts of Fig. 11, Fig. 12 and the flowcharts of Fig. 16, Fig. 17, Fig. 18, Fig. 19 have been drawn up for the situation when the load does not fluctuate much.

In steps S121, S122, basic air flowrates (a basic air inlet flowrate $Qm10$ and a basic middle air flowrate $Qm20$) of the reformer 8 which give the optimal raw fuel conversion efficiency when none of the above seven cases apply (usual state), are computed.

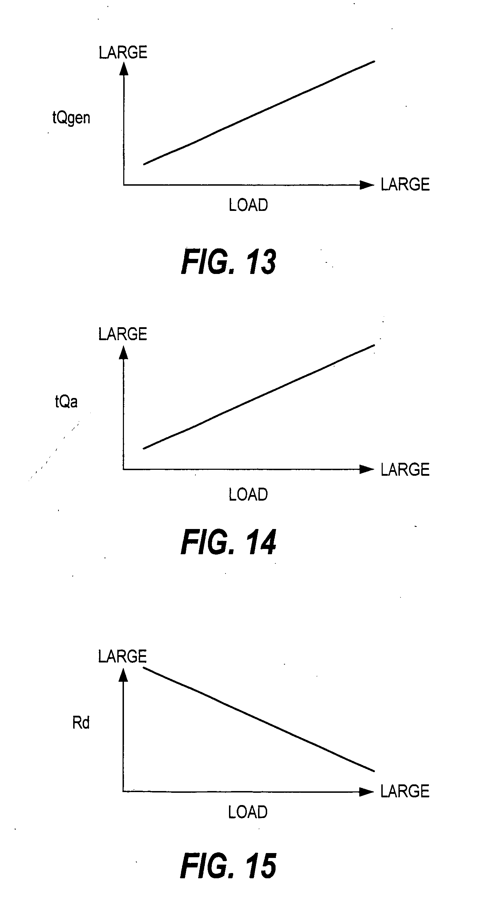

Specifically, in the step S121, the target raw fuel flowrate $tQgen$ [kg/min] of the vaporizer 6, the target air flowrate $tQa$ [kg/min] of the reformer 8 and the distribution ratio $Rd$ when the target air flowrate $tQa$ is distributed between the air inlet 8d and middle air inlet 8f of the reformer 8, are read. These three values are calculated by looking up the tables shown in Fig. 13, Fig. 14 and Fig. 15, respectively.

The target flowrate ratio $tRqref$ is given by the following equation (a):

$$tRqref = tQo \;/\; tQgen$$

$$= tQa \times 0.21 \;/\; tQgen \qquad (a)$$

$tQo$ = target oxygen flowrate [kg/min]
$tQgen$ = target raw fuel flowrate [kg/min].

The target flowrate ratio $tRqref$ is a fixed value, and if equation (a) is re-arranged to give $tQa$, the following equation (b):

$$tQa = tRqref \; x \; tQgen \;/\; 0.21 \qquad (b)$$

is obtained.

If equation (b) is expressed in tabular form, the characteristic of Fig. 14 will be obtained.

In the step S121, an inlet catalyst temperature $Tkai1$ of the reformer 8 is also read from a temperature sensor 39.

In the step S122, the basic air inlet flowrate $Qm10$ and the basic middle air flowrate $Qm20$ are computed by the following equations (2) and (3) using the target air flowrate $tQa$ and the distribution ratio $Rd$ of the reformer 8:

$$Qm10 = tQa \times Rd \qquad (2)$$

$$Qm20 = tQa \times (1 - Rd) \qquad (3)$$

If these values are assigned to the flow control valves 21, 22, when none of the above seven cases applies (usual operation), the optimal raw fuel conversion rate is obtained in the reformer 8.

In a step S123, a flag $FLAG\_A1$ is observed. As the initial value of the flag $FLAG\_A1$ is "0", the routine proceeds to a step S124. In the step S124, to decrease the raw fuel flowrate to the reformer 8 by a predetermined value $\Delta1$ (positive fixed value), a target raw fuel flowrate $tQgen1$ [kg/min] of the vaporizer 6 is computed by the following equation (4):

$$tQgen1 = tQgen - \Delta1 \qquad (4)$$

The predetermined value $\Delta1$ is set to a value which obviously decreases the reformate gas flow of the reformer outlet, and also obviously decreases the carbon monoxide in the reformate gas proportionately. The predetermined value $\Delta1$ is determined based on experimental results.

In a step S125, a target air flowrate $tQa1$ of the reformer 8 which realizes a predetermined flowrate ratio $Rqref1$ smaller than the target flowrate ratio $tRqref$ under the target raw fuel flowrate $tQgen1$, is computed by the following equation (5):

$$tQa1 = tQgen1 \times Rqref1/0.21 \qquad (5)$$

$tQgen1 \times Rqref1$ which is the numerator of the right-hand side of equation (5), is the oxygen flowrate [kg/min] at the predetermined flowrate ratio $Rqref1$. The air flowrate [kg/min] is obtained by dividing this by 0.21, which is the oxygen proportion in air.

By reducing the air flowrate to the reformer 8 until the flowrate ratio is the predetermined flowrate ratio $Rqref1$ according to the equation (5), the proportion of raw fuel and oxygen in the reformer 8, that is, the reaction state, changes, and the ratio of raw fuel changed into hydrogen-rich gas (conversion rate) changes. Due to this, the carbon monoxide contained in the reformate gas falls immediately. The predetermined flowrate ratio $Rqref$ of equation (5) is determined by experiment or simulation beforehand so that the carbon monoxide in the reformate gas can be effectively reduced.

When the air flowrate to the reformer 8 is decreased in the step S125, the purpose is to change the flowrate ratio and change the raw fuel conversion rate, so the air inlet flowrate of the reformer 8 is left as it is, and the middle air flowrate of the reformer 8 is first decreased. As a result, the air inlet flowrate is not reduced until the middle air flowrate becomes zero. In order to achieve this, in a step S126, a flowrate decrease $dQa$ of the air flowrate is computed by the following equation (6):

$$dQa = tQa - tQa1 \qquad (6)$$

In a step S127, this flowrate decrease $dQa$ and the basic middle air flowrate $Qm20$ are compared. When the flowrate decrease $dQa$ is smaller than the basic middle air flowrate $Qm20$, the flowrate decrease $dQa$ can be achieved by decreasing the middle air flowrate, so the routine proceeds to a step S128 and a target middle air flowrate $Qm2$ is computed by the following equation (7):

$$Qm2 = Qm20 - dQa \qquad (7)$$

The basic air inlet flowrate $Qm10$ is set equal to the target air inlet flowrate $Qm1$.

On the other hand, if the flowrate decrease $dQa$ exceeds the basic middle air flowrate $Qm20$, the flowrate decrease $dQa$ cannot be achieved by merely decreasing the middle air flowrate. Hence, the routine proceeds from the step S127 to a step S129, and the target middle air flowrate $Qm2$ is set to zero to achieve the flowrate decrease of $Qm20$ and the target air inlet flowrate $Qm1$ is computed by the following equation (8) to achieve the further flowrate decrease of $dQa-Qm20$:

$$Qm1 = Qm10 - (dQa - Qm20) \qquad (8)$$

The computation of the target air inlet flowrate $Qm1$ and the target middle air flowrate $Qm2$ in the first avoidance processing is complete, so a timer $t$ is started and the flag $FLAG\_A1$ is set to "1" in steps S130, S131. After starting the timer $t$, in a step S132, $Qm1$, $Qm2$, $tQgen1$ are moved to an output register. The timer $t$ is for measuring the time from starting first avoidance processing. On startup, the timer $t$ is reset to zero, and subsequently becomes larger as the time progresses.

The opening of the flow control valve 21 is controlled so that the actual air inlet flowrate detected by the flowrate sensor 32 coincides with the target air inlet flowrate $Qm1$. The opening of the flow control valve 22 is also controlled so that the actual middle air flowrate detected by the flowrate sensor 33 coincides with the target middle air flowrate $Qm2$.

The flow control valves 21, 22 may be replaced by flow control valves of the self-regulating type. In these control valves, flowrate sensors are built in, and when the target air flowrates $Qm1$ and $Qm2$ are supplied as inputs, the valve openings are driven automatically so that these values and the real flowrates detected by the built-in flowrate sensors coincide.

The flowrate controllers (injectors) in the water and fuel feeders 4, 5 are controlled so that raw fuel is supplied to the reformer 8 at the computed target raw fuel flowrate $tQgen$.

After the flag $FLAG\_A1$ is set to "1", on the next and subsequent occasions, the routine proceeds from the step S123 to a step S133, and the timer $t$ is compared with a predetermined value $t0$ (positive fixed value). The predetermined value $t0$ is set as the period until the effect of a drop of raw fuel flowrate due to the start of the first avoidance processing appears, causing a reduction of reformate gas flowrate, and the carbon monoxide in the reformate gas decreases. Due to the start of the first avoidance processing, a large amount of unreacted raw fuel will be contained in the reformate gas and if this state continues for a long time, it will have an adverse effect on the fuel cell 17 and power generation performance will be reduced, therefore $t0$ must not be set to too long a time.

For example, JP8-273690A published by the Japanese Patent Office in 1996 discloses the case when the unreacted material is methanol. $t0$ is determined from the result of experiment or simulation conducted beforehand.

When the timer $t$ is less than $t0$, the reduction of raw fuel flowrate continues so the routine proceeds to a step S134 and the present state is maintained. That is, the immediately preceding values of $Qm1, Qm2, tQgen1$ are taken as the present values, and the step S132 is performed. The immediately preceding value of $Qm1$ is denoted as $Qm1z$, the immediately preceding value of $Qm2$ is denoted as $Qm2z$, and the immediately preceding value of $tQgen1$ is denoted as $tQgen1z$.

When the timer $t$ becomes $t0$ or larger, the routine proceeds to the return processing of the step S133 to the step S135 and subsequent steps of Fig. 12.

In the step S135, the inlet catalyst temperature $Tkai1$ of the reformer 8 detected by the temperature sensor 39 and the target operating temperature $Tm$ of the reformer 8 (e.g., 400°C) are compared. Due to the drop of the raw fuel flowrate after the start of first avoidance processing, the inlet catalyst temperature of the reformer 8 falls, so at the beginning when the timer $t$ is $t0$ or more and the routine proceeds to the step S135, $Tkai1$ is lower than $Tm$. Therefore, at this time, the routine proceeds to a step S136, and a temperature difference $\Delta T$ from the target operating temperature $Tm$ is computed by the following equation (9):

$$\Delta T = Tm - Tkai1 \qquad (9)$$

To eliminate this temperature difference $\Delta T$, proportional integral operation is performed in a step S137 based on the temperature difference $\Delta T$, and a feedback amount $Qfb$ is computed.

In a step S138, the target air inlet flowrate $Qm1$ is computed from the following equation (10):

$$Qm1 = Qm1z + Qfb \qquad (10)$$

where $Qm1z$ = immediately preceding value of $Qm1$.

When the temperature difference $\Delta T$ is a positive value, $Qfb$ is a positive value, and $Qm1$ is increased. Initially, the value of $Qm1z$, before the timer $t$ becomes $t0$ or more and the routine proceeds to the step S135, is the value of $Qm1$ immediately before $t$ becomes $t0$ or more. In a step S139, the target air inlet flowrate $Qm1$ and the basic air inlet flowrate $Qm10$ are compared. When $Qm10$ is larger than $Qm1$, it means that some air cannot be supplied from the air inlet 8d of the reformer 8. In this case, in order to supply the air which cannot be supplied from the air inlet 8d of the reformer 8, from the middle air inlet 8f, the routine proceeds to a step S140 and the target middle air flowrate $Qm2$ is computed by the following equation (11):

$$Qm2 = Qm10 - Qm1 \qquad (11)$$

On the other hand, when $Qm10$ is less than $Qm1$, $Qm10$ can be supplied by increasing the air inlet flowrate of the reformer 8, so the routine proceeds to a step S141 and $Qm2$ is set to zero.

In a step S142, the value of the target raw fuel flowrate $tQgen1$ of the vaporizer 6 is maintained, and a step S143 is performed.

If the steps S136-S143 are repeated, the inlet catalyst temperature $Tkai1$ of the reformer 8 will eventually reach the target operating temperature $Tm$ or higher. When the target operating temperature $Tm$ or higher is reached, the routine proceeds from the step S135 to a step S144, the present air flowrate to the reformer 8 is maintained, the flag $FLAG\_A1$ is set to "0" and the end flag $FLAG\_E1$ is set to "1" in steps S145, S146 to prepare for the next occasion, and the routine proceeds to the steps S142, S143.

When the flag $FLAG\_E1$ is "1", in Fig. 3, the routine proceeds from the steps S31, S36 to the step S35, and the flag $FLAG\_J1$ is set to "0." As a result, it is again determined whether Case 1 applies from the flowchart of Fig. 3, and if Case 1 does apply, the flag $FLAG\_J1$ is again "1" and first avoidance processing is performed.

Next, second avoidance processing will be described.

The second avoidance processing is almost the same as the first avoidance processing, so a detailed description will be omitted. In the second avoidance processing, the names of the flags are changed in Fig. 11 and Fig. 12, i.e., in the second avoidance processing, the flag $FLAG\_A1$ of the steps S123, S131, S145 is changed to a $FLAG\_A2$, and the flag $FLAG\_E1$ of the step S146 is changed to a $FLAG\_E2$.

Fig. 16 is for calculating the target air inlet flowrate $Qm1$ and the target middle air flowrate $Qm2$ of the reformer 8, and the target raw fuel flowrate $tQgen$ of the vaporizer 6 in the third avoidance processing. Fig. 16 is the subroutine of the step S112 of Fig. 10, and is performed at the same interval as Fig. 10. Identical step numbers are attached to the same parts as those of Fig. 11 and Fig. 12.

The parts which differ from Fig. 11 and Fig. 12 will mainly be described here. In a step S153, to decrease the raw fuel flowrate to the reformer 8 by a predetermined value $\Delta 2$ (positive fixed value), the target raw fuel flowrate $tQgen1$ of the vaporizer 6 is computed by the following equation (12) instead of the above equation (4):

$$tQgen1 = tQgen - \Delta 2 \qquad (12)$$

In a step S154, the target air flowrate $tQa1$ to the reformer 8 is computed by the following equation (13) instead of the above equation (5) so that the flowrate ratio becomes the target flowrate ratio $tRqref$ (fixed value) under the target raw fuel flowrate $tQgen1$:

$$tQa1 = tQgen1 \times tRqref/0.21 \qquad (13)$$

In the third avoidance processing (and also in the fourth to seventh avoidance processings described later), return operation after a predetermined period is not performed unlike the first and second avoidance processings, so the step S133 of Fig. 11 and the steps S135-S146 of Fig. 12 are not in Fig. 16. Further, in a step S151, reading of the inlet catalyst temperature $Tkai1$ of the reformer 8 is unnecessary.

In steps S152, S155, the names of the flags are different from those of the first avoidance processing to agree with the third avoidance processing.

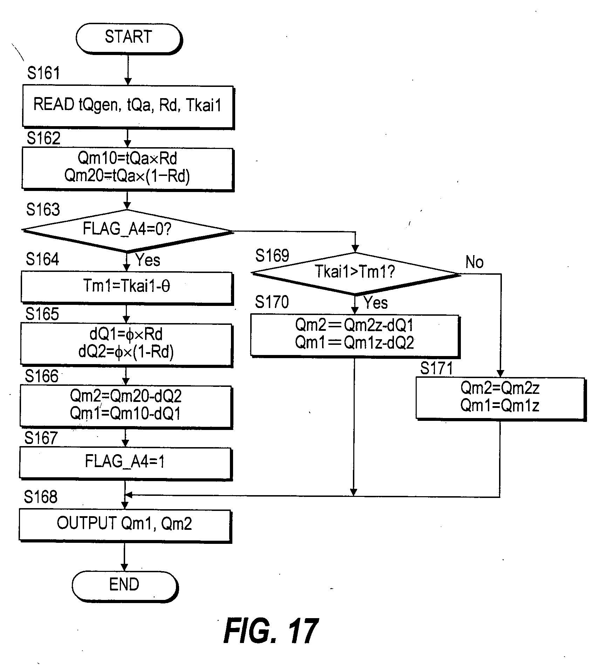

Fig. 17 is for computing the target air inlet flowrate $Qm1$ and the target middle air flowrate $Qm2$ of the reformer 8 in the fourth avoidance processing. Fig. 17 is the subroutine of the step S111 of Fig. 10 and is performed at the same interval as Fig. 10.

In a step S161, the target raw fuel flowrate $tQgen$ of the vaporizer 6, the target air flowrate $tQa$ of the reformer 8 the distribution ratio $Rd$, and the inlet catalyst temperature $Tkai1$ of the reformer 8, are read. In a step S162, the basic air inlet flowrate $Qm10$ and the basic middle air flowrate $Qm20$ are computed by the equations (2) and (3).

In a step S163, a flag $FLAG\_A4$ is observed. As the initial value of the flag $FLAG\_A4$ is "0", the routine proceeds to a step S164, and a value which is lower than the actual inlet catalyst temperature $Tkai1$ of the reformer 8 by a predetermined value $\theta$ (positive fixed value) is set as the target temperature $Tm1$ of the reformer 8 in the fourth avoidance processing by the following equation (14):

$$Tm1 = Tkai1 - \theta \qquad (14)$$

In a step S165, the air flowrate to the reformer 8 is decreased by a predetermined amount $\phi$ (positive fixed value). Specifically, a flowrate decrease $dQ1$ from the air inlet flowrate and a flowrate decrease $dQ2$ from the middle air flowrate are computed by the following equations (15) and (16):

$$dQ1 = \phi \times Rd \qquad (15)$$

$$dQ2 = \phi \times (1 - Rd) \qquad (16)$$

By subtracting these flowrate decreases from the basic values in the step S166, i.e., from the following equations (17) and (18):

$$Qm1 = Qm1 - dQ1 \qquad (17)$$

$$Qm2 = Qm2 - dQ2 \qquad (18)$$

the target air inlet flowrate $Qm1$ and the target middle air flowrate $Qm2$ can be computed.

After setting the flag $FLAG\_A4$ to "1" in a step S167, $Qm1$ and $Qm2$ are moved to an output régister in a step S168.

Due to the setting of the flag $FLAG\_A4$ to "1", on the next occasion, the routine proceeds from the step S163 to a step S169, and the inlet catalyst temperature $Tkai1$ of the reformer 8 and the target temperature $Tm1$ of the reformer 8 in the fourth avoidance processing are compared. When the routine first proceeds to the step S169, $Tkai1$ is higher than $Tm1$, so to further reduce the air flowrate to the reformer 8, the target air inlet flowrate $Qm1$ and the target middle air flowrate are decreased by the following equations (19), (20) in a step 170:

$$Qm1 = Qm1z - dQ1 \qquad (19)$$

$$Qm2 = Qm2z - dQ2 \qquad (20)$$

where, $Qm1z$ = immediately preceding value of $Qm1$

$Qm2z$ = immediately preceding value of $Qm2$,

and then the step S168 is performed.

If the step S170 is repeated and the air flowrate to the reformer 8 is reduced, the inlet catalyst temperature $Tkai1$ of the reformer 8 will eventually become less than the target temperature $Tm1$ of the reformer 8 in the fourth avoidance processing. When it becomes less than the target temperature $Tm1$, the routine proceeds from the step S169 to a step S171, and the present air flowrate to the reformer 8 is maintained.

Fig. 17 is performed with the same interval as Fig. 10, but as there is a response delay from when the air flowrate to the reformer 8 is reduced to when the result of this is reflected in the temperature, the interval of Fig. 17 may be made to differ from the interval of Fig. 10 taking account of the response delay.

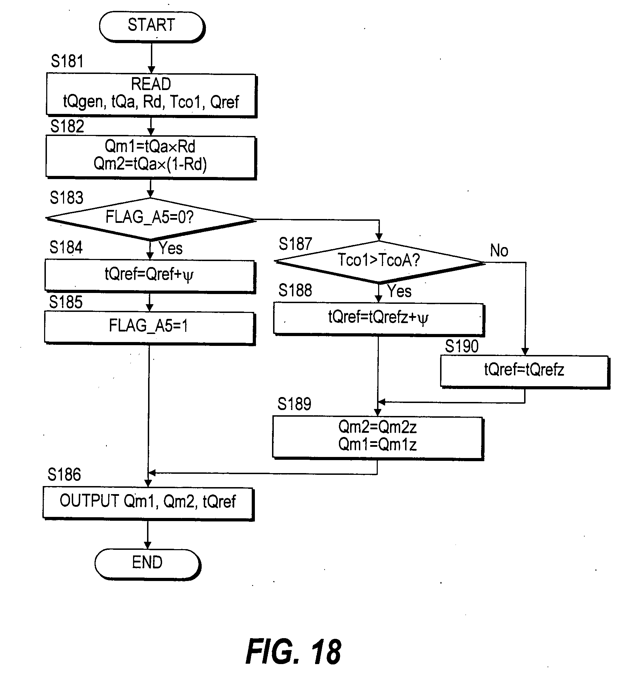

Fig. 18 is for calculating the target air inlet flowrate $Qm1$ and the target middle air flowrate $Qm2$ of the reformer 8, and the target coolant flowrate $tQref$ to the carbon monoxide oxidizer 9, in the fifth avoidance processing. Fig. 18 is the subroutine of the step S110 in Fig. 10, and is performed with the same interval as Fig.

10.

In a step S181, $tQgen, tQa$, the distribution ratio Rd, the inlet catalyst temperature $Tco1$ of the carbon monoxide oxidizer 9 detected by the temperature sensor 36 and the actual coolant flowrate $Qref$ detected by the flowrate sensor 37, are read.

In a step S182, the target air inlet flowrate $Qm1$ and the target middle air flowrate $Qm2$ are computed by the following equations (21), (22):

$$Qm1 = tQa \times Rd \qquad (21)$$

$$Qm2 = tQa \times (1 - Rd) \qquad (22)$$

In a step S183, a flag $FLAG\_A5$ is observed. The initial value of the flag $FLAG\_A5$ is "0", so the routine proceeds to a step S184 and the target coolant flowrate $tQref$ is computed by the next equation (23) to increase the coolant flowrate from the present flowrate by a predetermined value $\psi$ (positive fixed value):

$$tQref = Qref + \psi \qquad (23)$$

After setting the flag $FLAG\_A5$ to "1" in a step S185, $Qm1, Qm2, tQref$ are moved to an output register in a step S186. The opening of the flowrate control valve 21 is controlled so that air flows at the target air inlet flowrate $Qm1$, and the opening of a flow control valve 22 is controlled so that air flows at the target middle air flowrate $Qm2$.

Also, the operation of the temperature controller 13 is stopped and a command value is directly outputted to the flowrate controller 14 so that coolant is supplied at the computed target coolant flowrate $tQref$ to the carbon monoxide oxidizer 9.

Describing this in more detail, according to this embodiment, the temperature controller 13 gives a command value to the flowrate controller 14 so that the inlet catalyst temperature $Tco1$ of the carbon monoxide oxidizer 9 is maintained at a predetermined value, e.g., a temperature lower than the maximum value $Tco1$ by a predetermined allowance, so to change the coolant flowrate to the carbon monoxide oxidizer 9, it would appear to be sufficient if the controller 31 gives a command to change the target temperature to the temperature controller 13. However, if Case 5 applies and it is necessary to adjust the coolant flowrate, it means that the temperature control by the temperature controller 13 is not functioning well. For this reason, instead of changing the target temperature given to the temperature controller 13, the operation of the temperature controller 13 is stopped, and the target coolant flowrate $tQref$ is output directly to the flowrate controller 14.

When the flag $FLAG\_A5$ is set to "1", on the next occasion, the routine proceeds from the step S183 to a step S187, and the inlet catalyst temperature $Tco1$ of the carbon monoxide oxidizer 9 is compared with a predetermined temperature $TcoA$. The predetermined temperature $TcoA$ is, for example, a value obtained by allowing a predetermined margin $\varepsilon1$ (positive fixed value) from the maximum value $TcoMAX$, i.e.,

$$TcoA = TcoMAX - \varepsilon1 \qquad (24)$$

When the routine first proceeds to the step S187, as $Tco1$ is higher than $TcoA$, in order to increase the coolant flowrate to the carbon monoxide oxidizer 9, in a step S188, the target coolant flowrate $tQref$ is computed from the following equation (25):

$$tQref = tQrefz + \psi \qquad (25)$$

where, $tQrefz$ = immediately preceding value of $tQref$.
In a step S189, the target air inlet flowrate $Qm1$ and the target middle air flowrate $Qm2$ of the reformer 8 are maintained in their present state, and the step S186 is performed.
If steps S188 and S186 are repeated and the coolant flowrate to the carbon monoxide oxidizer 9 is increased, the inlet catalyst temperature $Tco1$ eventually falls, and will fall to below the predetermined temperature $TcoA$. At this time, the routine proceeds from the step S187 to a step S190, the target coolant flowrate $tQref$ at that time is maintained, and steps S189, S186 are performed.
The flowchart of Fig. 18 is performed with the same interval as Fig. 10, but as there is a delay from when the coolant flowrate to the carbon monoxide oxidizer 9 is increased to when the result is reflected in the temperature, the interval of Fig. 18 may differ from that of Fig. 10 to take account of the delay.

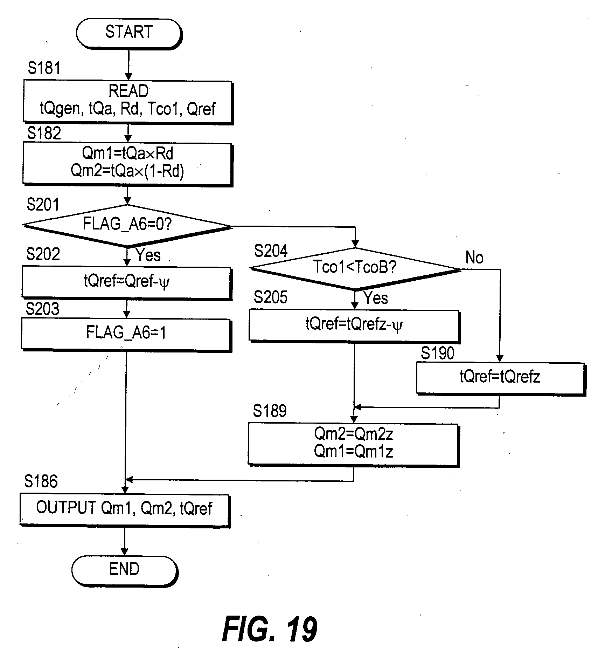

Fig. 19 computes the target air inlet flowrate $Qm1$ and the target middle air flowrate $Qm2$ of the reformer 8, and the target coolant flowrate $tQref$ to the carbon monoxide oxidizer 9, in the sixth avoidance processing. Fig 19 is the subroutine of the step S109 of Fig 10, and is executed at an identical interval to Fig. 10. Identical step numbers to those of Fig 18 are given to identical parts.
This will be described focusing on the differences from Fig. 18. In a step S201, a flag $FLAG\_A6$ is observed. The initial value of the flag $FLAG\_A6$ is "0", so the routine proceeds to a step S202, and the target coolant flowrate $tQref$ is computed by the following equation (26):

$$tQref = Qref - \psi \qquad (26)$$

to decrease the coolant flowrate by a predetermined value $\psi$ (positive fixed value) from the present state.

After the flag $FLAG\_A6$ is set to "1" in a step S203, $Qm1$, $Qm2$, $tQref$ are moved to an output register in the step S186.
When the flag $FLAG\_A6$ is "1", from the next occasion, the routine proceeds from the step S201 to a step S204, and the inlet catalyst temperature $Tco1$ of the carbon monoxide oxidizer 9 is compared with a predetermined temperature $TcoB$. The predetermined temperature $TcoB$ may for example be a value obtained by allowing a predetermined tolerance $\varepsilon2$ (positive fixed value) from the minimum value $TcoMIN$.

$$TcoB = TcoMIN + \varepsilon2 \qquad (27)$$

When the routine first proceeds to the step S204, $Tco1$ is less than $TcoB$, so to further reduce the cooling flowrate to the carbon monoxide oxidizer 9, the routine proceeds to a step S205 and the target cooling flowrate $tQref$ is computed from the following equation (28):

$$tQref = tQrefz - \psi \qquad (28)$$

where, $tQrefz$ = immediately preceding value of $tQref$.
In the step S189, the target air inlet flowrate $Qm1$ and target middle air flowrate $Qm2$ of the reformer 8 are maintained at their present values, and the step S186 is executed.
If the steps S205, S186 are repeated, the cooling flowrate to the carbon monoxide oxidizer 9 is decreased, and $Tco1$ eventually rises above the predetermined temperature $TcoB$. When it is higher than the predetermined temperature $TcoB$, the routine proceeds from the step S204 to the step S190, the target coolant flowrate $tQref$ at that time is maintained, and the steps S189, S186 are executed.
The flowchart of Fig. 19 is executed at an identical interval to Fig. 10, but as there is a delay until the decrease of flowrate to the carbon monoxide oxidizer 9 is reflected in the temperature, the interval of Fig 19 may differ from the interval of Fig. 10 to take account of this delay.
In Fig. 18, Fig. 19, the predetermined value $\psi$ (steps S184, S188 of Fig. 18) which is the increment in the cooling flowrate per unit interval, and the predetermined value $\psi$ (steps S202, S205 of Fig. 19) which is the decrement in the cooling flowrate per unit interval, may be identical or different.

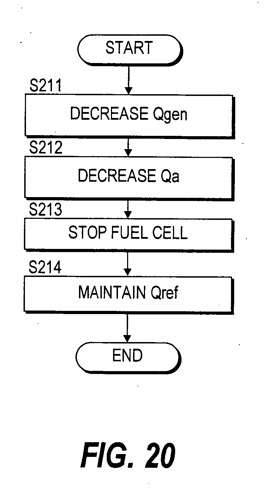

Fig. 20 describes the seventh avoidance processing. Fig. 20 is the subroutine of the step S108 of Fig. 10, and is executed at an identical interval to Fig. 10.
In steps S211, S212, the raw fuel flowrate $Qgen$ and air flowrate $Qa$ to the reformer 8 are gradually reduced from their present values. In a step S213, power generation of the fuel cell 17 is stopped. The reason why the raw fuel flowrate and air flowrate are reduced at a predetermined variation rate is because, if the raw fuel flowrate $Qgen$ and air flowrate $Qa$ are suddenly reduced, the variation would be too large and the fuel reforming system would become unstable. However, the coolant flowrate $Qref$ to the carbon monoxide oxidizer 9 is maintained without reduction (step S214).

Next, the operation of this embodiment will be described.

In this embodiment, it is determined whether or not the processing performance of the carbon monoxide oxidation catalyst reaches its limit (marginal operation state) based on the running state of the carbon monoxide oxidizer 9, and when it is determined that the processing performance of the carbon monoxide oxidation catalyst reaches its limit, avoidance processing is performed to avoid the marginal operation state. Hence, the marginal operation state of the carbon monoxide oxidizer 9 is avoided.

When the marginal operation state is avoided, the carbon monoxide oxidizer 9 becomes capable of removing carbon monoxide. Hence, even if the carbon monoxide of the reformate gas sharply increases, the increased carbon monoxide can be removed due to the capacity of the carbon monoxide oxidizer 9 to remove the carbon monoxide. Specifically, the processing performance of the carbon monoxide oxidation catalyst is prevented from shifting to its limit, so untreated carbon monoxide is prevented from flowing into the fuel cell 17.

If the outlet temperature $Tco2$ of the carbon monoxide oxidizer 9 exceeds the maximum value $Tco2MAX$, the reaction in the carbon monoxide oxidation catalyst proceeds actively to the outlet so the carbon monoxide which should be removed is probably present up to the outlet. Also, if the coolant flowrate $Qref$ exceeds the maximum value $QrefMAX$, further cooling cannot be performed. As carbon monoxide which should be removed is present up to the outlet and further cooling cannot be performed, the processing performance of the carbon monoxide oxidation catalyst reaches its limit, and even if air is then supplied to the carbon monoxide oxidizer 9 to cause an oxidation reaction (exothermic reaction), carbon monoxide cannot be removed.

In such a case, according to this embodiment, the raw fuel flowrate to the reformer 8 is reduced. Hence, the reformate gas flowrate at the reformer outlet falls, the carbon monoxide in the reformate gas falls, and the processing performance of the carbon monoxide oxidation catalyst returns to the state where there is some allowance compared to the limit (the marginal operation state of the carbon monoxide oxidizer 9 is avoided).

Also according to this embodiment, the air flowrate to the reformer 8 is decreased so that the flowrate ratio becomes less than the target flowrate ratio, therefore the reaction state in the reformer 8 changes. Thus, the carbon monoxide in the reformate gas can be reduced more rapidly than by maintaining the flowrate ratio at the target flowrate ratio and reducing the raw fuel flowrate.

If the coolant flowrate Qref to the carbon monoxide oxidizer 9 falls below the minimum value $QrefMIN$, cooling is unnecessary although a certain amount of air is being supplied to the carbon monoxide oxidizer 9, and the inlet catalyst temperature $Tco1$ of the carbon monoxide oxidizer 9 falls below the minimum value $Tco1MIN$, it may be supposed that the carbon monoxide oxidation catalyst is not active, i.e., that the carbon monoxide oxidation catalyst has deteriorated (if the catalyst is active and the oxygen concentration in the vicinity of the inlet of the carbon monoxide oxidizer 9 is high, the catalyst temperature in the vicinity of the inlet would rise).

In this case also, the processing performance of the carbon monoxide oxidation catalyst reaches a limit, so even if air is then supplied to the carbon monoxide oxidizer 9 to cause an oxidation reaction (exothermic reaction), carbon monoxide cannot be removed.

In this case, according to this embodiment, the raw fuel flowrate to the reformer 8 is reduced. Due to this, the reformate gas flowrate at the reformer outlet falls, the carbon monoxide in the reformate gas falls, and the processing performance of the carbon monoxide oxidation catalyst can be restored to a state where there is some allowance compared to the limit (the limited operation state of the carbon monoxide oxidizer is avoided).

Further, according to this embodiment, the air flowrate to the reformer 8 is decreased so that the flowrate ratio is less than the target flowrate ratio. Due to this, the reaction state in the reformer 8 changes, and the carbon monoxide in the reformate gas falls more rapidly than if the flowrate ratio were maintained at the target flowrate ratio and the raw fuel flowrate reduced.

When the flowrate ratio is less than the target flowrate ratio, the conversion efficiency of the reformer 8 falls, and the amount of unreacted raw fuel remaining in the reformate gas at the reformer outlet increases. It may be expected that if this state continues for a long time, it will have an adverse effect on the fuel cell 17. However, according to this embodiment, the air flowrate to the reformer 8 is increased until the flowrate ratio coincides with the target flowrate ratio when the predetermined period, from when the drop in raw fuel flowrate has the effect of reducing the reformate gas flowrate until the carbon monoxide in the reformate gas decreases, has elapsed. Due to this, the conversion efficiency of the reformer 8 is restored, unreacted raw fuel in the reformate gas is reduced and an adverse effect on the fuel cell 17 is prevented.

When the inlet catalyst temperature $Tco1$ and outlet catalyst temperature $Tco2$ of the carbon monoxide oxidizer 9 are in their usual states, i.e., in the state where there is not much possibility that the carbon monoxide oxidizer 9 will immediately start to pass carbon monoxide (if the outlet catalyst temperature $Tco2$ of the carbon monoxide oxidizer does not exceed the maximum value $Tco2MAX$, there is almost no carbon monoxide in the vicinity of the outlet, so there is almost no oxidation reaction to remove carbon monoxide and cooling is performed by the coolant), if the coolant flowrate $Qref$ exceeds the maximum value $QrefMAX$, the performance of the carbon monoxide oxidizer 9 is being exploited to the limit while the temperature is maintained at a suitable value. Therefore, if a gas containing oxygen is then supplied to the carbon monoxide oxidizer 9 to promote the oxidation reaction, there is a possibility that it may no longer be possible to remove carbon monoxide.

In this case, according to this embodiment, the raw fuel flowrate to the reformer 8 is reduced. Hence, the reformate gas flowrate at the reformer outlet falls, the carbon monoxide in the reformate gas falls, and the processing performance of the carbon monoxide oxidation catalyst can be restored to a state where there is some allowance compared to the limit (the marginal operation state of the carbon monoxide oxidizer is avoided).

Further, according to this embodiment, the air flowrate to the reformer 8 is decreased so that the flowrate ratio is maintained at the target flowrate ratio, and the reformate gas flowrate can be decreased without changing the reaction state in the reformer 8. As a result, a change of the reaction state in the reformer 8 leading to a running state of the reformer 8 which would produce excess carbon monoxide, is avoided.

When the air flowrate $Qcoa$ to the carbon monoxide oxidizer 9 exceeds the maximum value $QcoaMAX$ regardless of the coolant flowrate $Qref,$ inlet catalyst temperature $Tco1$ and outlet catalyst temperature $Tco2$ of the carbon monoxide oxidizer 9, it may be considered that the carbon monoxide of the reformate gas at the reformer outlet is too high (state where, in the carbon monoxide oxidizer 9, more air is required to remove carbon monoxide and the air flowrate exceeds the maximum value). In other words, when more air than the maximum value $QcoaMAX$ is required in the carbon monoxide oxidizer 9, the running state of the reformer 8 is not appropriate, and there is too much carbon monoxide in the reformate gas at the reformer outlet.

If an air flowrate exceeding the maximum value $QcoaMAX$ continues to be supplied to the carbon monoxide oxidizer 9, the balance between cooling by the coolant and the heat released by the oxidation reaction to remove carbon monoxide will be upset, the carbon monoxide oxidation catalyst will become hot, and there is a possibility that it will no longer be possible to promote the reaction of the carbon monoxide oxidation catalyst by increasing the air flowrate to the carbon monoxide oxidizer 9.

In this case, according to this embodiment, the air flowrate $Qcoa$ to the reformer 8 is decreased to reduce the catalyst temperature of the reformer 8. Thus, the production of carbon monoxide in the reformer 8 can be suppressed, and the processing performance of the carbon monoxide oxidation catalyst can be restored to the state where there is some allowance compared to the limit (the marginal operation state of the carbon monoxide oxidizer 9 is avoided).

A large increase of the air flowrate to the carbon monoxide oxidizer 9 may be required when, for example, the carbon monoxide oxidation catalyst has deteriorated (due to deterioration, the catalyst has reduced ability to remove carbon monoxide, so the air flowrate increases above the maximum value in an attempt to promote the removal of the carbon monoxide in the oxidation reaction). However, in this case, the air flowrate to the reformer 8 is reduced and the reformer temperature is reduced, so production of carbon monoxide in the reformer 8 is suppressed.

If the outlet catalyst temperature $Tco2$ of the carbon monoxide oxidizer 9 exceeds the maximum value of $Tco2MAX$ and the coolant flowrate $Qref$ to the carbon monoxide oxidizer 9 exceeds the maximum value $QrefMAX$, it may indicate that although the carbon monoxide oxidation catalyst is working properly to remove carbon monoxide, the amount of heat released cannot be completely cooled by the coolant.

In this case, according to this embodiment, the coolant flowrate $Qref$ to the carbon monoxide oxidizer 9 is increased. Thus, the outlet catalyst temperature $Tco2$ of the carbon monoxide oxidizer 9 is reduced, and the processing performance of the carbon monoxide oxidation catalyst is restored to the state where there is some allowance compared to the limit (the marginal operation state of the carbon monoxide oxidizer is avoided).

If a certain amount of air is supplied to the carbon monoxide oxidizer 9, the temperature of the carbon monoxide oxidizer 9 will rise due to the oxidation reaction (if the catalyst is active, the temperature in the vicinity of the inlet of the carbon monoxide oxidizer 9 rises since the oxygen concentration in the vicinity of the air supply port is high). Thus, if the inlet catalyst temperature $Tco1$ of the carbon monoxide oxidizer 9 falls below the minimum value $Tco1MIN$ and the cooling flowrate $Qref$ to the carbon monoxide oxidizer 9 is higher than the minimum value $QrefMIN$, although an air flowrate exceeding the minimum value $QcoaMIN$ is being supplied to the carbon monoxide oxidizer 9, it may indicate that there is too much cooling due to the coolant.

In this case, according to this embodiment, the coolant flowrate $Qref$ to the carbon monoxide oxidizer 9 is reduced. Thus, the inlet catalyst temperature $Tco1$ of the carbon monoxide oxidizer 9 rises, and the processing performance of the carbon monoxide oxidation catalyst is restored to the state where there is some allowance compared to the limit (the marginal operation state of the carbon monoxide oxidizer 9 is avoided).

If the air flowrate $Qcoa$ to the carbon monoxide oxidizer 9 is less than the minimum value $QcoaMIN$ regardless of the coolant flowrate $Qref,$ inlet catalyst temperature *Tco1* and outlet catalyst temperature *Tco2* of the carbon monoxide oxidizer 9, it indicates that there is some fault in the fuel reforming system. The situation, where the air flowrate to the carbon monoxide oxidizer 9 is less than the minimum value, might suggest that the carbon monoxide oxidizer 9 can remove the carbon monoxide with a lower air flowrate, but such a situation cannot exist as the performance of the carbon monoxide oxidation catalyst cannot be enhanced above specification.

In this case, according to this embodiment, the raw fuel flowrate and air flowrate to the reformer 8 are reduced, and power generation by the fuel cell 17 is stopped, so the continuation of a running state where there is a fault in the fuel reforming system is avoided.

When the determination is made in the steps S2-S8 of Fig. 2 as to whether or hot any of the above Cases 1-7 applies, it may occur that two or more cases apply simultaneously. If all the avoidance processing corresponding to these cases is performed, different avoidance processings may be performed at the same time. According to this embodiment, the sequence of determination of the seven cases is managed as in Fig. 2, so when two or more cases apply, the avoidance processing corresponding to the last case determined is performed (Fig. 10). Hence, the situation where different avoidance processings are performed at the same time is prevented.

According to this embodiment, the case was described where the flowrate ratio was a mass flowrate ratio, but to simplify the description, a volume flowrate ratio can also be used.

According to this embodiment, a reforming system for reforming methanol was described, but this invention may be applied also to a reforming system for gasoline or other fuel.

The entire contents of Japanese Patent Application P2002-111835 (filed April 15, 2002) are incorporated herein by reference.

Although the invention has been described above by reference to a certain embodiment of the invention, the invention is not limited to the embodiment described above. Modifications and variations of the embodiments described above will occur to those skilled in the art, in the light of the above teachings. The scope of the invention is defined with reference to the following claims.

**Claims**

1.  A fuel reforming system, comprising:

    a reformer (8) which generates reformate gas containing hydrogen by a reforming reaction and a partial oxidation reaction using an oxygen-containing gas and raw fuel,
    a carbon monoxide oxidizer (9) containing a carbon monoxide oxidation catalyst which removes carbon monoxide contained in the reformate gas by a shift reaction between carbon monoxide in the reformate gas and water, and a preferential oxidation reaction which oxidizes a remaining carbon monoxide not oxidized in the shift reaction using the oxygen-containing gas, and supplies the reformate gas from which the carbon monoxide has been removed to a fuel cell (17),
    a cooling device (12) which cools a heat liberated by the shift reaction and preferential oxidation reaction in the carbon monoxide oxidizer (9) by a coolant, and
    a controller (31) functioning to:

        determine whether the carbon monoxide oxidizer (9) is in a marginal operation state where a processing performance of the carbon monoxide oxidation catalyst has reached a limit, and
        perform an avoidance processing to avoid the marginal operation state of the carbon monoxide oxidation catalyst.

2.  The fuel reforming system as defined in Claim 1, wherein:

        the controller (31) further functions to determine whether the carbon monoxide oxidizer (9) is in the marginal operation state according to a running state of the carbon monoxide oxidizer (9).

3.  The fuel reforming system as defined in Claim 2, wherein:

        the controller (3) further functions to detect the running state of the carbon monoxide oxidizer (9) based on at least one of an inlet catalyst temperature of the carbon monoxide oxidizer (9), an outlet catalyst temperature of the carbon monoxide oxidizer (9), a coolant flowrate to the carbon monoxide oxidizer (9) and a flowrate of the oxygen- containing gas to the carbon monoxide oxidizer (9).

4.  The fuel reforming system as defined in Claim 3, wherein:

        the controller (31) further functions to:

            determine that the carbon monoxide oxidizer (9) is in the marginal operation state when the coolant flowrate to the carbon monoxide oxidizer (9) exceeds a maximum value, and the outlet catalyst temperature of the carbon monoxide oxidizer (9) exceeds a maximum value, and
perform the avoidance processing by
reducing a raw fuel flowrate to the reformer (8), and
decreasing an oxygen-containing gas flowrate to the reformer (8) so that a flowrate ratio, which is a value obtained by dividing an oxygen flowrate to the reformer (8) by a raw fuel flowrate to the reformer (8), is less than a target flowrate ratio, which is a value determined by a reaction equation in the reformer (8).

5. The fuel reforming system as defined in Claim 3, wherein:

the controller (31) further functions to:

determine that the carbon monoxide oxidizer (9) is in the marginal operation state when the inlet catalyst temperature of the carbon monoxide oxidizer (9) is less than a minimum value, the coolant flowrate to the carbon monoxide oxidizer (9) is less than a minimum value and the oxygen-containing gas flowrate to the carbon monoxide oxidizer (9) exceeds a minimum value, and
perform the avoidance processing by
reducing a raw fuel flowrate to the reformer (8), and
decreasing an oxygen-containing gas flowrate to the reformer (8) so that a flowrate ratio, which is a value obtained by dividing an oxygen flowrate to the reformer (8) by a raw fuel flowrate to the reformer (8), is less than a target flowrate ratio, which is a value determined by a reaction equation in the reformer (8).

6. The fuel reforming system as defined in Claim 4 or 5, wherein:

the controller (31) further functions to increase the oxygen-containing gas flowrate to the reformer (8) so that the flowrate ratio coincides with the target flowrate ratio, after a predetermined time has elapsed from when the effect of decreasing the oxygen-containing gas flowrate appears.

7. The fuel reforming system as defined in Claim 3, wherein:

the controller (31) further functions to:

determine that the carbon monoxide oxidizer (9) is in the marginal operation state when the coolant flowrate to the carbon monoxide oxidizer (9) exceeds a maximum value, the inlet catalyst temperature of the carbon monoxide oxidizer (9) lies between a maximum value and a minimum value, and the outlet catalyst temperature of the carbon monoxide oxidizer (9) lies between a maximum value and a minimum value, and
perform the avoidance processing by
reducing a raw fuel flowrate to the reformer (8), and
decreasing an oxygen-containing gas flowrate to the reformer (8) so that a flowrate ratio, which is a value obtained by dividing an oxygen flowrate to the reformer (8) by a raw fuel flowrate to the reformer (8), maintains a target flowrate ratio, which is a value determined by a reaction equation in the reformer (8).

8. The fuel reforming system as defined in Claim 3, wherein:

the controller (31) further functions to determine that the carbon monoxide oxidizer (9) is in the marginal operation state when the oxygen-containing gas flowrate to the carbon monoxide oxidizer (9) exceeds a maximum value, and
perform the avoidance processing by decreasing an oxygen-containing gas flowrate to the reformer (8).

9. The fuel reforming system as defined in Claim 3, wherein:

the controller (31) further functions to:

determine that the carbon monoxide oxidizer (9) is in the marginal operation state when the outlet catalyst temperature of the carbon monoxide oxidizer (9) exceeds a maximum value, and the coolant flowrate to the carbon monoxide oxidizer (9) is less than a maximum value, and
perform the avoidance processing by increasing the coolant flowrate to the carbon monoxide oxidizer (9).

10. The fuel reforming system as defined in Claim 3, wherein:

the controller (31) further functions to:

determine that the carbon monoxide oxidizer (9) is in the marginal operation state when the inlet catalyst temperature of the carbon monoxide oxidizer (9) is less than a minimum value, the coolant flowrate to the carbon monoxide oxidizer (9) exceeds a minimum value and the oxygen-containing gas flowrate to the carbon monoxide oxidizer (9) exceeds a minimum value, and perform the avoidance processing by decreasing the coolant flowrate to the carbon monoxide oxidizer (9).

11. The fuel reforming system as defined in Claim 3, wherein:

the controller (31) further functions to:

determine that the carbon monoxide oxidizer (9) is in the marginal operation state when the oxygen-containing gas flowrate to the carbon monoxide oxidizer (9) is less than a maximum value, and
perform the avoidance processing by reducing an oxygen-containing gas flowrate to the reformer (8), and stopping power generation by the fuel cell (17).

12. The fuel reforming system as defined in Claim 3, wherein, when two or more of the following cases apply, avoidance processing having an identical number to the applying case with the highest case number, is performed:

Case 1: The coolant flowrate to the carbon monoxide oxidizer (9) exceeds a maximum value, and the outlet catalyst temperature of the carbon monoxide oxidizer (9) exceeds a maximum value,
Case 2: The inlet catalyst temperature of the carbon monoxide oxidizer (9) is less than a minimum value, the coolant flowrate to the carbon monoxide oxidizer (9) is less than a minimum value, and the oxygen-containing gas flowrate to the carbon monoxide oxidizer (9) exceeds a minimum value,
Case 3: The coolant flowrate to the carbon monoxide oxidizer (9) exceeds the maximum value, the inlet catalyst temperature of the carbon monoxide oxidizer (9) lies between a maximum value and the minimum value, and the outlet catalyst temperature of the carbon monoxide oxidizer (9) lies between the maximum value and a minimum value,
Case 4: The oxygen-containing gas flowrate to the carbon monoxide oxidizer (9) exceeds a maximum value,
Case 5: The outlet catalyst temperature of the carbon monoxide oxidizer (9) exceeds the maximum value, and the coolant flowrate to the carbon monoxide oxidizer (9) is less than the maximum value,
Case 6: The inlet catalyst temperature of the carbon monoxide oxidizer (9) is less than the minimum value, the coolant flowrate to the carbon monoxide oxidizer (9) exceeds the minimum value, and the oxygen-containing gas flowrate to the carbon monoxide oxidizer (9) exceeds the minimum value,
Case 7: The oxygen-containing gas flowrate to the carbon monoxide oxidizer (9) is less than the minimum value,
Avoidance processing 1: A raw fuel flowrate to the reformer (8) is decreased, and an oxygen-containing gas flowrate to the reformer (8) is decreased so that a flowrate ratio, which is a value obtained by dividing an oxygen flowrate to the reformer (8) by the raw fuel flowrate to the reformer (8), is less than a target flowrate ratio, which is a value determined by a reaction equation in the reformer (8),
Avoidance processing 2: The oxygen-containing gas flowrate to the reformer (8) is decreased so that the flowrate ratio is less than the target flowrate ratio,
Avoidance processing 3: The raw fuel flowrate to the reformer (8) is decreased, and the oxygen-containing gas flowrate to the reformer (8) is decreased so that the flowrate ratio maintains the target flowrate ratio,
Avoidance processing 4: The oxygen-containing gas flowrate to the reformer (8) is decreased,
Avoidance processing 5: The coolant flowrate to the carbon monoxide oxidizer (9) is increased,
Avoidance processing 6: The coolant flowrate to the carbon monoxide oxidizer (9) is decreased,
Avoidance processing 7: The raw fuel flowrate and the oxygen-containing gas flowrate to the reformer (8) are decreased, and power generation by the fuel cell (17) is stopped.

13. The fuel reforming system as defined in any of Claims 4 to 6, comprising:

a raw fuel flowrate adjusting mechanism (4, 5) which can adjust the raw fuel flowrate to the reformer (8), and
a gas flowrate adjusting mechanism (20, 21) which can adjust the oxygen-gas containing flowrate to the reformer (8), wherein the controller (31) further functions to:

compute a basic raw fuel flowrate to the reformer (8) according to a load of the fuel reforming system,
compute a target raw fuel flowrate to the reformer (8) by reducing the basic raw fuel flowrate by a predetermined value,

control the raw fuel flowrate adjusting mechanism (4, 5) so that the computed target raw fuel flowrate is achieved,

compute a target oxygen-containing gas flowrate to the reformer (8) based on the target raw fuel flowrate so that the flowrate ratio is less than the target flowrate ratio, and

control the gas flowrate adjusting mechanism (20, 21) so that the computed target gas flowrate is achieved.

14. The fuel reforming system as defined in Claim 7, comprising:

a raw fuel flowrate adjusting mechanism (4, 5) which can adjust the raw fuel flowrate to the reformer (8), and

a gas flowrate adjusting mechanism (20, 21) which can adjust the oxygen-gas containing flowrate to the reformer (8), wherein the controller (31) further functions to:

compute a basic raw fuel flowrate to the reformer (8) according to a load of the fuel reforming system,

compute a target raw fuel flowrate to the reformer (8) by reducing the basic fuel flowrate by a predetermined value,

control the raw fuel flowrate adjusting mechanism (4, 5) so that the computed target raw fuel flowrate is achieved,

compute a target oxygen-containing gas flowrate to the reformer (8) based on the target raw fuel flowrate so that the flowrate ratio maintains the target flowrate ratio, and

control the gas flowrate adjusting mechanism (20, 21) so that the computed target gas flowrate is achieved.

15. A fuel reforming system as defined in any of Claims 4 to 7, wherein:

the reformer (8) comprises:

a raw fuel inlet (8c) for supplying the raw fuel,

a gas inlet (8d) for supplying the oxygen-containing gas used in the partial oxidation reaction,

a catalyst (8b) which produces the hydrogen-containing reformate gas by performing the reforming reaction and the partial oxidation reaction using the oxygen-containing gas and raw fuel,

a gas outlet (8e) which discharges the produced reformate gas, and

a middle gas inlet (8f) for supplying the oxygen-containing gas between the gas inlet (8d) and the gas outlet (8f), and

the controller (31) further functions to first decrease the gas flowrate supplied to the middle gas inlet (8f).

16. A fuel reforming system as defined in Claim 8, wherein:

the reformer (8) comprises:

a raw fuel inlet (8c) for supplying the raw fuel,

a gas inlet (8d) for supplying the oxygen-containing gas used in the partial oxidation reaction,

a catalyst (8b) which produces the hydrogen-containing reformate gas by performing the reforming reaction and the partial oxidation reaction using the oxygen-containing gas and raw fuel,

a gas outlet (8e) which discharges the produced reformate gas, and

a middle gas inlet (8f) for supplying the oxygen-containing gas between the gas inlet (8d) and the gas outlet (8f), and

the controller (31) further functions to decrease the gas flowrate supplied to the gas inlet (8d) and the gas flowrate supplied to the middle gas inlet (8f).

17. The fuel reforming system as defined in any of Claims 4, 5, 6, 7, 12, 13, 14, wherein the flowrate ratio is a mass flowrate ratio.

**FIG. 1**

EP 1 357 084 A1

START

S1

READ Tco1, Tco2, Qcoa, Qref

S2

DETERMINATION OF CASE 1

S3

DETERMINATION OF CASE 2

S4

DETERMINATION OF CASE 3

S5

DETERMINATION OF CASE 4

S6

DETERMINATION OF CASE 5

S7

DETERMINATION OF CASE 6

S8

DETERMINATION OF CASE 7

RETURN

*FIG. 2*

**FIG. 3**

EP 1 357 084 A1

```
                    ┌─────────┐
                    │  START  │
                    └─────────┘
                         │
         S41             ▼                    No
              ◇ FLAG_J2=0? ◇────────────────────────────────┐
                         │ Yes                               │
         S42             ▼          No        No    S47       │
              ◇ Tco1<Tco1MIN? ◇──────────►◄──────◇ FLAG_E2=0? ◇
                         │ Yes                  │        │ Yes
         S43             ▼          No          │        │
              ◇ Qref<QrefMIN? ◇───────────────►│        │
                         │ Yes                  │        │
         S44             ▼          No          │        │
              ◇ Qcoa≥QcoaMIN? ◇──────────────►│        │
         S45             │ Yes        S46       │        │
              ┌──────────────┐   ┌──────────────┐        │
              │  FLAG_J2=1   │   │  FLAG_J2=0   │        │
              └──────────────┘   └──────────────┘        │
                         │◄──────────────┴───────────────┘
                         ▼
                    ┌─────────┐
                    │   END   │
                    └─────────┘
```

**FIG. 4**

23

EP 1 357 084 A1

START

S51
FLAG_J3=0? — No

Yes

S52
Qref>QrefMAX? — No

Yes

S53
Tco1MIN≤Tco1 ≤Tco1MAX? — No

Yes

S54
Tco2MIN≤Tco2 ≤Tco2MAX? — No

S55 Yes
FLAG_J3=1

S56
FLAG_J3=0

END

*FIG. 5*

24

START

S61 FLAG_J4=0? — No

Yes

S62 Qcoa>QcoaMAX? — No

S63 Yes

FLAG_J4=1

S64

FLAG_J4=0

END

**FIG. 6**

START

S71 → FLAG_J5=0? — No →

Yes ↓

S72 → Tco2>Tco2MAX? — No →

Yes ↓

S73 → Qref≤QrefMAX? — No →

S74 Yes ↓

FLAG_J5=1

S75

FLAG_J5=0

END

**FIG. 7**

**FIG. 8**

START

S91 — FLAG_J7=0? — No

Yes

S92 — Qcoa<QcoaMIN? — No

S93 | Yes — FLAG_J7=1

S94 — FLAG_J7=0

END

## FIG. 9

START

S101 FLAG_J7=1? — No → S102
Yes ↓
S108 7th AVOIDANCE PROCESSING

S102 FLAG_J6=1? — No → S103
Yes ↓
S109 6th AVOIDANCE PROCESSING

S103 FLAG_J5=1? — No → S104
Yes ↓
S110 5th AVOIDANCE PROCESSING

S104 FLAG_J4=1? — No
Yes ↓
S111 4th AVOIDANCE PROCESSING

RETURN

S105 FLAG_J3=1? — No → S106
Yes ↓
S112 3rd AVOIDANCE PROCESSING

S106 FLAG_J2=1? — No → S107
Yes ↓
S113 2nd AVOIDANCE PROCESSING

S107 FLAG_J1=1? — No
Yes ↓
S114 1st AVOIDANCE PROCESSING

RETURN

**FIG. 10**

```
                    ┌─────────────┐
                    │    START    │
                    └──────┬──────┘
         S121              │
              ┌────────────▼─────────────┐
              │ READ tQgen, tQa, Rd, Tkai1│
              └────────────┬─────────────┘
         S122              │
              ┌────────────▼─────────────┐
              │      Qm10=tQa×Rd          │
              │      Qm20=tQa×(1-Rd)      │
              └────────────┬─────────────┘
         S123              │
              ╱───────────▼──────────────╲                          S133
              ╲      FLAG_A1=0?           ╱─────────────────┐    ╱──────────────╲         No
               ╲─────────┬───────────────╱                 └───▶╲    t<t0?      ╱──────────┐
         S124            │ Yes                                    ╲──────┬───────╱          │
              ┌──────────▼──────────┐                       S134        │ Yes              │
              │  tQgen1=tQgen-Δ1     │                          ┌───────▼────────┐        ┌─▼─┐
              └──────────┬──────────┘                          │  Qm1=Qm1z       │        │ 1 │
         S125            │                                     │  Qm2=Qm2z       │        └───┘
              ┌──────────▼──────────────┐                     │  tQgen1=tQgen1z │
              │ tQa1=tQgen1×tRqref1/0.21 │                    └───────┬────────┘
              └──────────┬──────────────┘
         S126            │
              ┌──────────▼──────────┐
              │  dQa=tQa-tQa1        │
              └──────────┬──────────┘
         S127            │
              ╱─────────▼──────────╲        No        S129
              ╲    dQa≤Qm20?        ╱────────────┐ ┌─────────────────────┐
               ╲────────┬──────────╱             └▶│  Qm2=0              │
         S128           │ Yes                      │  Qm1=Qm10-(dQa-Qm20) │
              ┌─────────▼─────────┐                └─────────┬───────────┘
              │  Qm2=Qm20-dQa     │                          │
              │  Qm1=Qm10         │                          │
              └─────────┬─────────┘                          │
         S130           │◄────────────────────────────────────┘
              ┌─────────▼─────────┐
              │  START TIMER t    │
              └─────────┬─────────┘
         S131           │
              ┌─────────▼─────────┐
              │   FLAG_A1=1       │
              └─────────┬─────────┘
         S132           │◄─────────────────────────────────┐
              ┌─────────▼─────────────┐
              │ OUTPUT Qm1、Qm2、tQgen1 │
              └─────────┬─────────────┘
                        │
                 ┌──────▼──────┐
                 │     END     │
                 └─────────────┘
```

# FIG. 11

```
                          ┌─────┐
                          │  1  │
                          └──┬──┘
                             │
S135              ◇ Tkai1<Tm? ◇ ──No──────────────────────┐
                    │                                      │
           S136    Yes                          S144       ▼
          ┌──────────────────┐            ┌──────────────────────┐
          │   ΔT=Tm-Tkai1     │            │      Qm1=Qm1z         │
          └────────┬─────────┘            │      Qm2=Qm2z         │
           S137    │                       └──────────┬───────────┘
          ┌──────────────────┐            S145         │
          │   COMPUTE Qfb     │            ┌──────────────────────┐
          └────────┬─────────┘            │      FLAG_A1=0         │
           S138    │                       └──────────┬───────────┘
          ┌──────────────────┐            S146         │
          │   Qm1=Qm1z+Qfb    │            ┌──────────────────────┐
          └────────┬─────────┘            │      FLAG_E1=1         │
           S139    │                       └──────────┬───────────┘
                ◇ Qm1<Qm10? ◇ ──No──┐                │
                    │               │                │
           S140    Yes    S141       ▼                │
          ┌──────────────┐   ┌──────────────┐        │
          │ Qm2=Qm10-Qm1 │   │    Qm2=0     │        │
          └──────┬───────┘   └──────┬───────┘        │
           S142   │◄────────────────┴────────────────┘
          ┌──────────────────┐
          │  tQgen1=tQgen1z   │
          └────────┬─────────┘
           S143    │
          ┌──────────────────────────┐
          │ OUTPUT Qm1、Qm2、tQgen1   │
          └────────┬─────────────────┘
                   │
              (  END  )
```

# FIG. 12

**FIG. 13**

**FIG. 14**

**FIG. 15**

START

S151 READ tQgen, tQa, Rd

S122
Qm10=tQa×Rd
Qm20=tQa×(1-Rd)

S152 FLAG_A3=0?

S153 Yes
tQgen1=tQgen-Δ2

S154
tQa1=tQgen1z×tRqref/0.21

S126
dQa=tQa-tQa1

S127 dQa≤Qm20?   No

S128 Yes
Qm2=Qm20-dQa
Qm1=Qm10

S134
Qm1=Qm1z
Qm2=Qm2z
tQgen1=tQgen1z

S129
Qm2=0
Qm1=Qm10-(dQa-Qm20)

S155
FLAG_A3=1

S132
OUTPUT Qm1, Qm2, tQgen1

END

**FIG. 16**

EP 1 357 084 A1

START

S161
READ tQgen, tQa, Rd, Tkai1

S162
Qm10=tQa×Rd
Qm20=tQa×(1−Rd)

S163
FLAG_A4=0?

S164 Yes
Tm1=Tkai1-θ

S165
dQ1=φ×Rd
dQ2=φ×(1-Rd)

S166
Qm2=Qm20-dQ2
Qm1=Qm10-dQ1

S167
FLAG_A4=1

S169
Tkai1>Tm1?     No

S170 Yes
Qm2＝Qm2z-dQ1
Qm1＝Qm1z-dQ2

S171
Qm2=Qm2z
Qm1=Qm1z

S168
OUTPUT Qm1, Qm2

END

## FIG. 17

START

S181
READ
tQgen, tQa, Rd, Tco1, Qref

S182
Qm1=tQa×Rd
Qm2=tQa×(1-Rd)

S183
FLAG_A5=0?

S187
Tco1>TcoA?

No

S184    Yes
tQref=Qref+$\psi$

S188    Yes
tQref=tQrefz+$\psi$

S185
FLAG_A5=1

S190
tQref=tQrefz

S189
Qm2=Qm2z
Qm1=Qm1z

S186
OUTPUT Qm1, Qm2, tQref

END

# FIG. 18

```
                        ┌──────────────┐
                        │    START     │
                        └──────┬───────┘
     S181                      ▼
          ┌────────────────────────────────────┐
          │             READ                    │
          │   tQgen, tQa, Rd, Tco1, Qref        │
          └────────────────┬───────────────────┘
     S182                   ▼
          ┌────────────────────────────────────┐
          │        Qm1=tQa×Rd                    │
          │        Qm2=tQa×(1-Rd)                │
          └────────────────┬───────────────────┘
     S201                   ▼
          ◇────────────────────────────◇────────────────┐
           FLAG_A6=0?                                    │
          ◇──────────────┬─────────────◇                │
     S202          │ Yes                          S204   ▼
          ┌──────────────────┐                 ◇────────────────◇──── No ──┐
          │   tQref=Qref-ψ    │                  Tco1<TcoB?               │
          └─────────┬────────┘                 ◇───────┬────────◇          │
     S203           ▼                      S205  │ Yes                     │
          ┌──────────────────┐            ┌────────────────────┐          │
          │    FLAG_A6=1      │            │   tQref=tQrefz-ψ    │          │
          └─────────┬────────┘            └─────────┬──────────┘   S190    ▼
                    │                                │         ┌──────────────────┐
                    │                                │         │   tQref=tQrefz    │
                    │                     S189       ▼         └────────┬─────────┘
                    │                    ┌────────────────────┐         │
                    │                    │    Qm2=Qm2z         │◀────────┘
                    │                    │    Qm1=Qm1z         │
                    │                    └─────────┬──────────┘
     S186           ▼◀───────────────────────────┘
          ┌────────────────────────────┐
          │   OUTPUT Qm1, Qm2, tQref    │
          └─────────────┬──────────────┘
                        ▼
                 ┌──────────────┐
                 │     END      │
                 └──────────────┘
```

**FIG. 19**

START

S211
DECREASE Qgen

S212
DECREASE Qa

S213
STOP FUEL CELL

S214
MAINTAIN Qref

END

# FIG. 20

FIG. 21

EP 1 357 084 A1

**European Patent Office** — **PARTIAL EUROPEAN SEARCH REPORT** — Application Number

which under Rule 45 of the European Patent Convention EP 03 00 5128
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 188 712 A (TOYOTA MOTOR CO LTD) 20 March 2002 (2002-03-20) * column 5, line 4 - column 5, line 26 * * column 6, line 49 - column 7, line 8 * * column 7, line 33 - column 8, line 55 * * figure 1 * | 1-11, 13-17 | C01B3/58 C01B3/48 C01B3/38 |
| X | WO 00 66487 A (LITTLE INC A) 9 November 2000 (2000-11-09) * claims 24,28 * * page 44, line 27 - page 46, line 3 * * figure 2 * * page 37, line 5 - page 38, line 10 * * figure 24 * | 1-11, 13-17 | |
| X | EP 1 162 679 A (MATSUSHITA ELECTRIC IND CO LTD) 12 December 2001 (2001-12-12) * figure 7 * * example 8 * | 1-3,9 | |
| X | DE 100 01 167 A (TOYOTA MOTOR CO LTD) 20 July 2000 (2000-07-20) * column 1, line 62 - column 2, line 14 * | 1,2 | **TECHNICAL FIELDS SEARCHED (Int.Cl.7)** C01B |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 15 July 2003 | Harf-Bapin, E |

**European Patent Office**

**INCOMPLETE SEARCH SHEET C**

Application Number

EP 03 00 5128

Claim(s) not searched:
12

Reason for the limitation of the search:

Present claim 12 contains so many options, that a lack of clarity and conciseness within the meaning of Article 84 EPC arises to such an extent as to render a meaningful search of the claim impossible. Consequently, no search has been carried out for claim 12.

EP 1 357 084 A1

## ANNEX TO THE EUROPEAN SEARCH REPORT
## ON EUROPEAN PATENT APPLICATION NO.

EP 03 00 5128

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2003

| Patent document cited in search report | | Publication date | Patent family member(s) | | Publication date |
|---|---|---|---|---|---|
| EP 1188712 | A | 20-03-2002 | JP | 2002160904 A | 04-06-2002 |
| | | | EP | 1188712 A2 | 20-03-2002 |
| | | | US | 2002031690 A1 | 14-03-2002 |
| WO 0066487 | A | 09-11-2000 | AU | 4697500 A | 17-11-2000 |
| | | | CA | 2372547 A1 | 09-11-2000 |
| | | | EP | 1181241 A1 | 27-02-2002 |
| | | | JP | 2002543033 T | 17-12-2002 |
| | | | WO | 0066487 A1 | 09-11-2000 |
| EP 1162679 | A | 12-12-2001 | JP | 3415086 B2 | 09-06-2003 |
| | | | JP | 2001180906 A | 03-07-2001 |
| | | | JP | 2001185183 A | 06-07-2001 |
| | | | JP | 2001180905 A | 03-07-2001 |
| | | | JP | 2001199702 A | 24-07-2001 |
| | | | JP | 2001319675 A | 16-11-2001 |
| | | | EP | 1162679 A1 | 12-12-2001 |
| | | | CN | 1342334 T | 27-03-2002 |
| | | | WO | 0148851 A1 | 05-07-2001 |
| | | | US | 2003035983 A1 | 20-02-2003 |
| DE 10001167 | A | 20-07-2000 | JP | 2000203804 A | 25-07-2000 |
| | | | DE | 10001167 A1 | 20-07-2000 |
| | | | US | 6455008 B1 | 24-09-2002 |

EPO FORM P0459

For more details about this annex : see Official Journal of the European Patent Office, No. 12/82

41